# EUROPEAN PATENT APPLICATION

(11) **EP 4 752 876 A1**
(43) Date of publication of application: **03.06.2026**
(21) Application number: 25219413.9
(22) Date of filing: 28.11.2025
(51) Int. Cl.: G10L 15/26, G06F 40/58, G10L 13/08

(54) **SPEECH-TO-SPEECH TRANSLATION**

(30) Priority: 29.11.2024 SE 2451215
(71) Applicant: Mabel AI AB, 413 90 Göteborg (SE)
(72) Inventor: Jabbar, Shahid, 411 43 Göteborg (SE); Sjöberg Jabbar, Karolina, 411 43 Göteborg (SE); Youssef, Sarab, 511 62 Skene (SE); Popova, Yana, 07400 Brovary (UA)
(74) Representative: Barker Brettell Sweden AB

(57) **Abstract**

A speech-to-speech translation method comprises transcribing speech spoken in a source language into transcribed text data in the source language using an on-premises speech recognition model (100). The transcribed text data is translated into translated text data in a target language using a first on-premises machine translation model (110). The translated text data is reverse translated into retranslated text data in the source language using a second, different on-premises machine translation model (120). The transcribed text and the retranslated text are displayed on a screen (30). The method also involves synthesizing, using an on-premises speech synthesis model (130), translated speech data in the target language based on the translated text data and play back, in response to a user confirmation, translated speech in the target language based on the translated speech data in the target language.

## Description

### TECHNICAL FIELD

The present invention generally relates to speech-to-speech translation, and in particular to such speech-to-speech translation with translation verification.

### BACKGROUND

Speech-to-speech (STS or S2S) translation is an advanced technology that enables real-time translation of spoken language from one language to another. Unlike traditional translation methods that often rely on written text, STS translation processes spoken input directly, making it particularly useful for multilingual communication. STS translation services typically involve automatic speech recognition (ASR) that converts the spoken input into transcribed text. Machine translation (MT) then translates the transcribed text into a target language. Finally, text-to-speech (TTS) converts the translated text back into spoken language, allowing the recipient to hear the translation. STS translation supports real-time communication by facilitating immediate interaction between speakers of different languages.

Most of the STS translation services are today provided online over the Internet, or are partly embedded on a user's device, e.g., as an application on a smartphone, but requiring Internet access since the more computationally complex operations are performed in the cloud or at a remote server. Such online STS translation services have the advantage that they can benefit from significant processing resources on a large server or the cloud, and provides a data feed to the service provider that makes improvements and customization possible. However, online processing requires continuing network connectivity, which cannot be guaranteed in all locations or is not desirable in some instances, such as due to privacy or security concerns. As alternative deployment, STS translators, such as JIBBIGO speech translation apps, can be delivered as software running embedded locally on the smartphone itself, and no network connectivity is needed after the initial download of the translation application. Such offline embedded speech translation capability is the preferred deployment for many if not most practical situations where language support is needed, as networks may not be available, intermittent or too expensive. Most travelers experience such intermittent or absent connectivity, for example, during airline flights, remote geographic locations, buildings, or simply because data roaming is turned off to avoid the associated roaming charges while traveling in a foreign country.

U.S. Patent Nos. 9,430,465 and 10,331,794 disclose a hybrid speech translation system whereby a wireless-enabled client computing device can, in an offline mode, translate input speech utterances from one language to another locally, and also, in an online mode when there is wireless network connectivity, have a remote computer perform the translation and transmit it back to the client computing device via the wireless network for audible outputting by client computing device. The user of the client computing device can transition between modes or the transition can be automatic based on user preferences or settings. The back-end speech translation server system can adapt the various recognition and translation models used by the client computing device in the offline mode based on analysis of user data over time, to thereby configure the client computing device with scaled-down, yet more efficient and faster, models than the back-end speech translation server system, while still be adapted for the user's domain.

U.S. Patent No. 10,409,919 discloses a display method including reading from a memory a language setting representing an original language and a first target language, detecting a first set of one or more characters input in the original language, recognizing the first set of one or more characters as first text, translating the first text from the original language to the first target language, displaying the translated first text on one or more display areas, translating the translated first text back to the original language, and displaying the first text translated back to the original language on the one or more display areas. U.S. Patent Application Publication No. 2024/0370669 discloses a speech translation processing apparatus including a speech inputter and a speech outputter operated in cooperation with a wearable speech input/output apparatus worn on a user, includes a translation speech acquirer acquiring translation speech in a user language or the other language that is translated and generated on the basis of a spoken speech in the user language or the other language input through the wearable speech input/output apparatus or the speech inputter, and a translation speech output controller performing control such that the acquired translation speech is output from at least one of the speech outputter and the wearable speech input/output apparatus in an output mode according to a translation condition. According to such a configuration, it is possible to provide a user-friendly translation system. U.S. Patent Application Publication No. 2017/0091177 discloses a machine translation apparatus including a memory and a hardware processor in electrical communication with the memory. The memory stores instructions. The processor executes the instructions to translate a text in a first language to a plurality of translation results in a second language, output at least one of the plurality of translation results to a screen, and synthesize a speech from at least another one of the plurality of translation results.

The quality of STS translation services can be defined by several key factors, such as transcription accuracy, translation quality, real-time performance, contextual understanding and consistency. The quality, in particular of offline STS services, may be varying, such as depending on the particular combination of source and target languages, or tradeoffs between real-time performance and computational complexity needed for running high accuracy and quality translation models. It is often very hard for the user to determine or verify the quality of a used STS translation service, in particular for the key factors transcription accuracy, translation quality, and consistency.

There is therefore a need for an STS translation service that enables the user to verify the translation as provided by the STS translation service.

### SUMMARY

It is a general objective to provide an STS translation service that enables the user to verify the translation as provided by the STS translation service.

This and other objectives are met by embodiments disclosed herein.

The invention is defined in the independent claims. Further embodiments of the invention are defined in the dependent claims.

An aspect of the invention relates to a computer-implemented STS translation method performed by a processor. The method comprising transcribing speech spoken in a source language into transcribed text data in the source language using an on-premises speech recognition model stored in a memory connected to the processor. The method also comprises translating the transcribed text data into translated text data in a target language using a first on-premises machine translation model stored in the memory. The method further comprises reverse translating the translated text data into retranslated text data in the source language using a second on-premises machine translation model stored in the memory. The second on-premises machine translation model is different than the first on-premises machine translation model. The method also comprises displaying, on a screen of a user device, a transcribed text based on the transcribed text data and a retranslated text based on the retranslated text data. The method additionally comprises synthesizing, using an on-premises speech synthesis model stored in the memory, translated speech data in the target language based on the translated text data. The method further comprises playing back, in response to a user confirmation and based on the translated speech data in the target language, translated speech in the target language.

Another aspect of the invention relates to a user device comprising a microphone configured to record speech, a speaker configured to play back speech, a screen, and a memory comprising a speech recognition model, a first machine translation model, a second machine translation model and a speech synthesis model. The user device also comprises a processor configured to transcribe speech spoken in a source language and recorded by the microphone into transcribed text data in the source language using the speech recognition model. The processor is also configured to translate the transcribed text data into translated text data in a target language using the first machine translation model and reverse translate the translated text data into retranslated text data in the source language using the second machine translation model that is different than the first machine translation model. The processor is further configured to display, on the screen, a transcribed text based on the transcribed text data and a retranslated text based on the retranslated text data and synthesize, using the speech synthesis model, speech data in the target language based on the translated text data. The processor is additionally configured to control, in response to a user confirmation, the speaker to play back speech in the target language based on the speech data in the target language.

A further aspect of the invention relates to a computer program comprising instructions, which when executed by at least one processor, cause the at least one processor to transcribe speech spoken in a source language into transcribed text data in the source language using an on-premises speech recognition model, translate the transcribed text data into translated text data in a target language using a first on-premises machine translation model, reverse translate the translated text data into retranslated text data in the source language using a second on-premises machine translation model that is different than the first on-premises machine translation model, output the transcribed text data and the retranslated text data for display of a transcribed text and a retranslated text, synthesize, using an on-premises speech synthesis model, translated speech data in the target language based on the translated text data, and output, in response to a user confirmation, the translated speech data in the target language for playback.

A further aspect of the invention relates to a system comprising a user device and one or more computing devices implemented in a private or local network or cloud. The user device comprises a microphone configured to record speech, a speaker configured to play back speech, a screen, and a communication unit configured to communicate with the one or more computing devices in the private or local network or cloud. The one or more computing devices comprises one or more memories comprising an on-premises speech recognition model, a first on-premises machine translation model, a second on-premises machine translation model and an on-premises speech synthesis model. The one or more computing devices also comprises one or more processors configured to transcribe speech spoken in a source language and recorded by the microphone into transcribed text data in the source language using the on-premises speech recognition model, translate the transcribed text data into translated text data in a target language using the first on-premises machine translation model, reverse translate the translated text data into retranslated text data in the source language using the second on-premises machine translation model that is different than the first on-premises machine translation model, and transmit the transcribed text data and the retranslated text data to the user device. The user device is configured to display, on the screen, a transcribed text based on the transcribed text data and a retranslated text based on the retranslated text data. The one or more processors is also configured to synthesize, using the on-premises speech synthesis model, speech data in the target language based on the translated text data, and transmit, in response to a user confirmation from the user device, the speech data in the target language. The user device is configured to play back speech in the target language on the speaker based on the speech data in the target language.

The STS translation of the invention employs ASR, MT and TTS models in the form of on-premises models. These models are thereby implemented locally on a user device or locally on physical servers, computers or other computing devices within an organization's local or private network or cloud. The on-premises models can thereby be run locally on a user device or within the local or private network or cloud without the need to Internet access. Such on-premises models thereby enable secure STS translation services without the risk of data leakage and compromise. The present invention can thereby be used when translating sensitive information, such as sensitive medical information, military communications, company trade secrets, and so forth. A significant advantage of the STS translation of the invention is that it enables a user verification of the translation to thereby guarantee or at least support a high quality level and accuracy of the translations. This is in particular important for the above-mentioned examples of sensitive information where there is a demand for a high accuracy in translation as translation errors may have severe consequences if the translated information is used to make decisions relating to care or treatment of patients, military decisions and considerations, etc.

### BRIEF DESCRIPTION OF THE DRAWINGS

The embodiments, together with further objects and advantages thereof, may best be understood by making reference to the following description taken together with the accompanying drawings, in which:
Fig. 1 is a flow chart illustrating a speech-to-speech translation method according to an embodiment;
Fig. 2 is a flow chart illustrating a speech-to-speech translation method according to another embodiment;
Fig. 3 schematically illustrates data flow in a speech-to-speech translation method according to an embodiment;
Fig. 4 schematically illustrates data flow in a speech-to-speech translation method according to another embodiment;
Fig. 5 is a flow chart illustrating additional, optional steps of the method shown in Fig. 1 or 2 according to an embodiment;
Fig. 6 is a flow chart illustrating additional, optional steps of the method shown in Fig. 1 or 2 according to another embodiment;
Fig. 7 is a flow chart illustrating additional, optional steps of the method shown in Fig. 1 or 2 according to a further embodiment;
Fig. 8 is a flow chart illustrating an additional, optional step of the method shown in Fig. 1 or 2 according to an embodiment;
Fig. 9 is a flow chart illustrating additional, optional steps of the method shown in Fig. 1 or 2 according to an embodiment;
Fig. 10 is schematic illustration of a user device according to an embodiment;
Fig. 11 schematically illustrates circuitry of a user device according to an embodiment;
Fig. 12 schematically illustrates display of text data on a user device according to an embodiment;
Fig. 13 schematically illustrates various models and engines stored in a memory of a user device according to an embodiment;
Fig. 14 schematically illustrates a user device according to another embodiment;
Fig. 15 illustrates an embodiment of training models used in the STS translation method; and
Fig. 16 schematically illustrates a system for STS translation according to an embodiment.

### DETAILED DESCRIPTION

The present invention generally relates to speech-to-speech translation, and in particular to such speech-to-speech translation with translation verification.

There is a need to ensure secure, reliable communication over language barriers in healthcare and other public services. In such settings, there is a great need for accessible real-time translation that does not compromise sensitive information. Traditional cloud-based translation services, while powerful, involve inherent data leakage risks. Importantly, access to cloud-based translation services is often restricted in emergency scenarios, such as rescue operations at sea, bomb shelters, or areas hit by natural disasters.

The present invention employs accurate, on-premises speech-to-speech (S2S or STS) models in a user-friendly way. These transformative technologies allow models to run directly on user devices, eliminating the need for network access and data transfer. This decentralization is beneficial in situations where data leakage can have severe consequences for all parties involved, such as sensitive medical information or military communications in peacekeeping missions. In scenarios, where no user device is available, or the user device does not have the necessary computing power, the invention offers a complete on-premise solution together with a web application that can be served from within a local or private network or cloud, for access by multiple people in the organization, or even a desktop computer.

STS translation is an advanced technology that enables real-time translation of spoken language from one language to another. Unlike traditional translation methods that often rely on written text, STS translation processes spoken input directly, making it particularly useful for multilingual communication. STS translation services typically involve automatic speech recognition (ASR) that converts the spoken input into transcribed text. Machine translation (MT) then translates the transcribed text into a target language. Finally, text-to-speech (TTS) converts the translated text back into spoken language, allowing the recipient to hear the translation. STS translation supports real-time communication by facilitating immediate interaction between speakers of different languages.

The STS translation of the invention employs ASR, ML and TTS models in the form of on-premises models. On-premises as used herein with reference to the on-premises models means that the models are implemented locally on a user device, also referred to as on-device implementation, or locally on physical servers, computers or other computing devices within an organization's local or private network or cloud. On-device models are thereby models installed and run directly on a user device, such as a computer, smartphone or a tablet. The models may alternatively be hosted on computing devices, such as servers and/or computers, within a local or private network or cloud. On-premises as used herein thereby means that on-premises models can be run locally on a user device or locally within a local or private network or cloud without the need for Internet access. Such on-premises models thereby enable secure STS translation services without the risk of data leakage and compromise. The present invention can thereby be used when translating sensitive information, such as sensitive medical information, military communications, company trade secrets, and so forth.

A significant advantage of the STS translation of the invention is that it enables user verification of the translation to thereby guarantee or at least support a high quality level and accuracy of the translations. This is in particular important for the above-mentioned examples of sensitive information where there is a demand for a high accuracy in translation as translation errors may have severe consequences if the translated information is used to make decisions relating to care or treatment of patients, military decisions and considerations, etc.

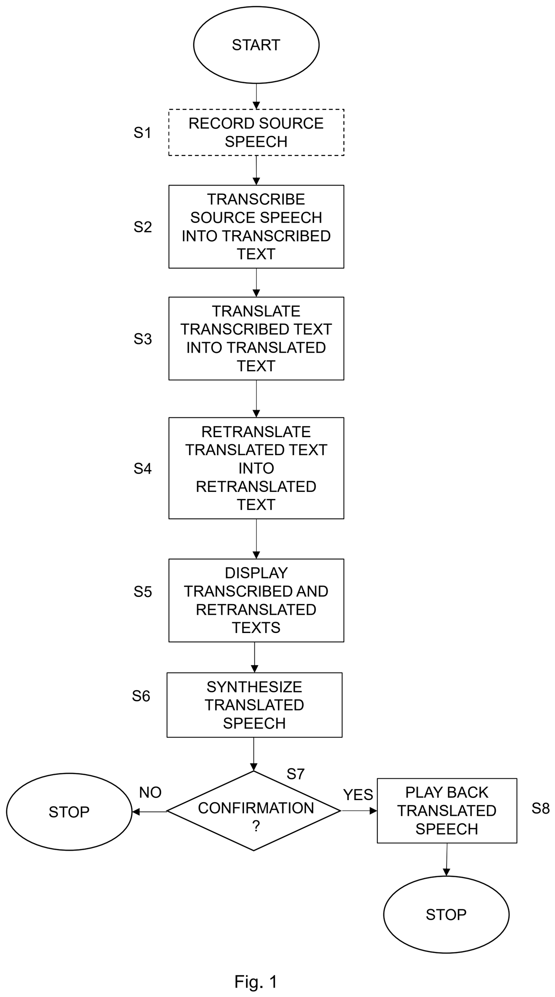

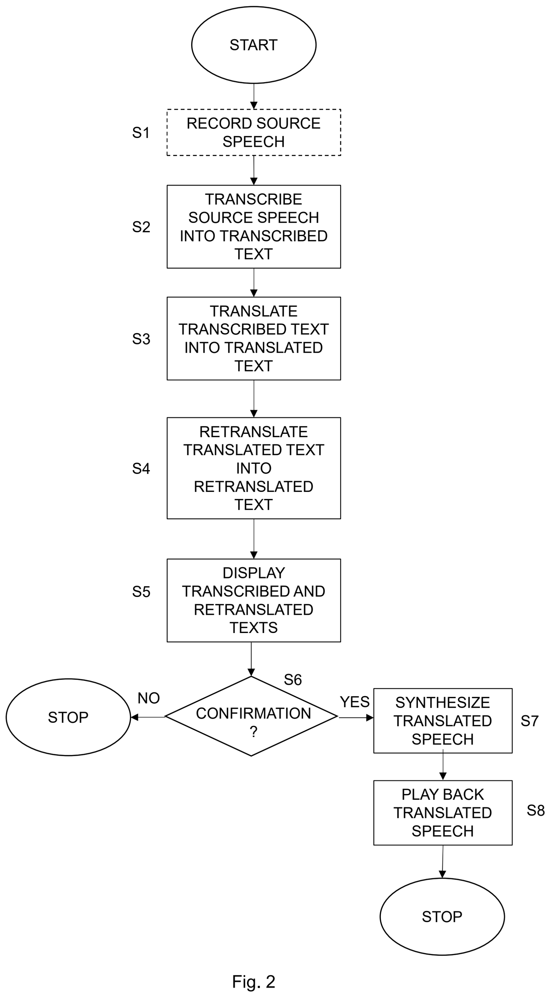

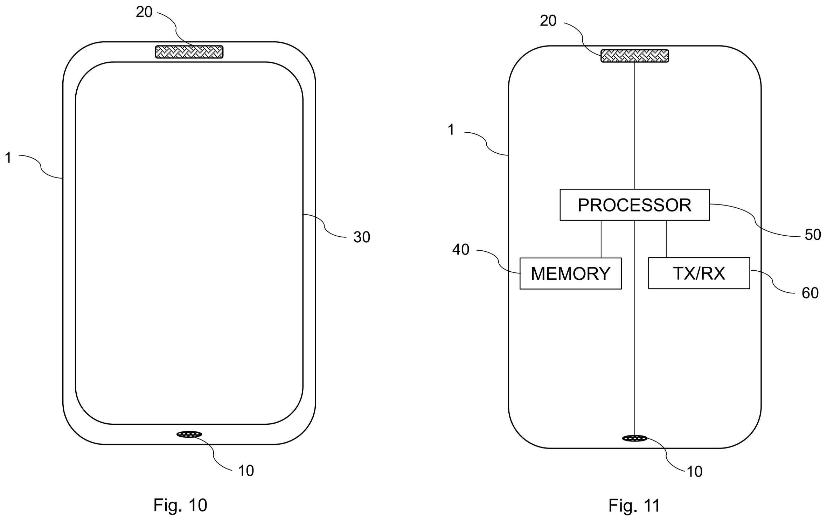

An aspect of the invention relates to a computer-implemented (CI) STS translation method performed by a processor 50, 324, 334, see Figs. 1, 2, 10, 11, 13 and 16. The method comprises transcribing, in step S2 speech spoken in a first or source language into transcribed text data in the source langue using an on-premises speech recognition model 100 stored in a memory 40, 322, 332 connected to the processor 50, 324, 334. The transcribed text data is then translated in step S3 into translated text data in a second or target language using a first or source-to-target (STT) on-premises machine translation model 110 stored in the memory 40, 322, 332. The method also comprises reverse translating the translated text data in step S4 into retranslated text data in the source language using a second or target-to-source (TTS) on-premises machine translation model 120 stored in the memory 40, 322, 332. The second on-premises machine translation model 120 is different than the first on-premises machine translation model 110. A transcribed text and a retranslated text are then displayed in step S5 on a screen 30 of a user device 1, see Fig. 10, based on the transcribed text data from step S2 and the retranslated text data from step S4. The method further comprises synthesizing, in step S6 in Fig. 1 and in step S7 in Fig. 2, translated speech data in the target language based on the translated text data and using an on-premises speech synthesis model 130 stored in the memory 40, 322, 332. The method further comprises playing back translated speech in the target language based on the translated speech data in the target language and in response to a user confirmation in step S8.

The STS translation method thereby enable translation of speech spoken in a first or source language into translated speech spoken in a second or target language but where the translated speech is played back first in response to a user confirmation of the translation quality. This quality confirmation is based on translating in step S3 the transcribed text data as obtained in step S2 by transcribing the original speech spoken in the source langue into translated text data in the target language using a first or STT on-premises machine translation model 110. This translated text data is then translated back in step S4 to the source language but using a different on-premises machine translation model than the first or STT on-premises machine translation model 110, i.e., the second or TTS on-premises machine translation model 120. The transcribed text data from step S2 and the retranslated text data from step S4 are then used to display corresponding transcribed text and retranslated text to the user on a screen 30. The user can then compare the two displayed texts and verify whether they are identical or at least sufficiently similar. In such a situation the translation is deemed to be of high quality and the user can thereby confirm the accuracy and quality of the translation. Such a user confirmation thereby triggers play back of the translated speech in the target language in step S8 to a listener or addressee. Hence, according to the invention, translated speech is preferably only played back to the listener if the speaker has confirmed the quality of the translation by a comparison of the transcribed text and the retranslated text.

The user verification further allows the user to reformulate his or her sentence if he or she does not consider the reverse translation, i.e., the retranslated text, to be correct, i.e., identical to or at least sufficiently similar to the transcribed text. The invention thereby adds a user verification to STS with the opportunity to change the speech in order to produce a translated text and translated speech that is of sufficient quality and accuracy.

In an embodiment, step S5 comprises displaying, on the screen 30, the transcribed text, the retranslated text and a translated text based on the translated text data. Hence, in this embodiment, not only the transcribed text and the retranslated text, both of which are in the source language, but also the translated text, which is in the target language, are displayed on the screen in step S5.

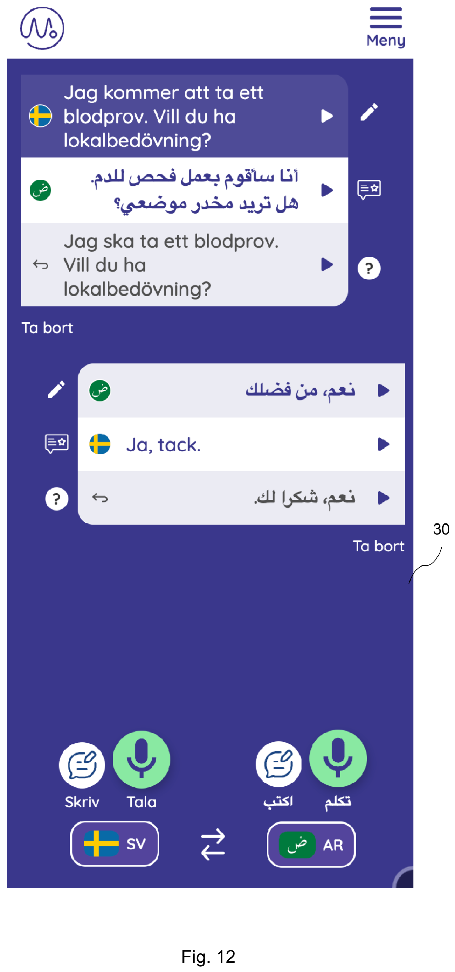

Fig. 12 schematically illustrates an example of the display of such texts. In the illustrated example, the source language is Swedish and the target language is Arabic. Two people are involved in a medical conversation, such as between a nurse speaking Swedish and a patient speaking Arabic. The nurse tells the patient that he/she will take a blood sample and ask whether the patient would like to have local anesthesia. The first paragraph following the Swedish flag and marked with a pen is the transcribed text generated by the on-premises speech recognition model 100 in step S2. The second paragraph marked with a speech bubble is the translated text generated by the first on-premises machine translation model 110 in step S3 and the third paragraph marked with a question mark is the retranslated text generated by the second on-premises machine translation model 120 in step S4. This third paragraph has a return symbol rather than a flag to indicate that it is a reverse translated or retranslated text. The nurse can then compare the transcribed text in the first paragraph with the retranslated text in the third paragraph to verify, firstly, that the transcription of the speech was correct and, secondly, whether the two displayed text match. In the illustrated example, the two texts are not identical but the meaning of the texts is sufficiently similar to confirm that the translation is correct and of high accuracy and quality. Further, the transcription is required as being correct. The nurse can then confirm the translation and transcription, which triggers or induces playback of the translated speech in Arabic corresponding to translated text displayed in the second paragraph on the screen.

The patient can then reply in Arabic that he/she would like to have local anesthesia. In this case, the transcribed text is in Arabic, the translated text is in Swedish and the retranslated text is in Arabic as shown in Fig. 12.

The STS translation method is a computer-implemented STS translation method. CI as used herein means that the STS translation method is performed by a processor 50 of a user device 1 or a processor 324, 334 of a system 300 comprising a user device 1 and one or more computing devices 320, 330 implemented in a private or local network or cloud 310.

In an embodiment, the processor 50 and the memory 40 comprising the on-premises speech recognition model 100, the first or STT on-premises machine translation model 110, the second or TTS on-premises machine translation model 120 and the on-premises speech synthesis model 130 are implemented in the user device 1.

In another embodiment, the processor 324, 334 and the memory 322, 332 comprising the on-premises speech recognition model 100, the first or STT on-premises machine translation model 110, the second or TTS on-premises machine translation model 120 and the on-premises speech synthesis model 130 are implemented in one or more computing devices 320, 330 of a system 300 comprising the one or more computing devices 320, 330 implemented in a private or local network or cloud 310 and the user device 1.

In the embodiment shown in Fig. 1, the translated speech data is synthesized using the on-premises speech synthesis model 130 in step S6 prior to and independent on any user confirmation. However, in this embodiment, the translated speech is played back in step S8 first in response to the user confirmation. Thus, the translated speech is preferably not played back until the user has confirmed the accuracy of the translation. Hence, in an embodiment, the translated speech is preferably played back if, and only if, the user has confirmed the accuracy of the translation.

In the embodiment shown in Fig. 2, the translated speech data is synthesized, based on the translated text data and using the on-premises speech synthesis model 130, in step S7 in response to the user confirmation. The translated speech is then played back in step S8 using the synthesized translated speech data.

The embodiment as shown in Fig. 1 has the advantage of minimizing any delay from the user confirming accuracy of translation in step S7 until the translated speech is played back in step S8. The embodiment, though, has the drawback that the translated speech data is synthesized in step S6 before or at least partly in parallel with the user confirming the accuracy of the translation. This means that if the user does not confirm that the translation is sufficiently accurate then the speech synthesis of step S6 is in vain since the translated speech will not be played back. This speech synthesis in vain could be a disadvantage for battery-powered user devices 1 as it involves performing a speech synthesis operation even when not needed.

The embodiment as shown in Fig. 2, correspondingly, has the slight drawback of a small delay from the user confirming the accuracy of the translation in step S6 until the translated speech can be played back in step S8. This small delay corresponds to the time of synthesizing the translated speech data in step S7. The embodiment of Fig. 2, though, has the advantage of not wasting any computational efforts or power to synthesize the translated speech in step S7 if the user does not confirm the accuracy of the translation in step S6.

The on-premises speech recognition model 100 used in step S2 processes and converts spoken language into written text. The on-premises speech recognition model 100 typically uses machine learning (ML) and artificial intelligence (AI) to identify and understand human speech and transcribe spoken words. The on-premises speech recognition model 100 thereby converts audio signals from speech into text data. The on-premises speech recognition model 100 preferably enables real-time processing to transcribe speech in step S2 in real-time.

In an embodiment, the on-premises speech recognition model 100 comprises an acoustic model that analyzes audio signals to identify phonemes, i.e., basic sound units. The on-premises speech recognition model 100 preferably also comprises a language model that predicts the likelihood of word sequences to improve transcription accuracy and a decoder that combines the outputs from the acoustic and language models to generate transcribed text data.

The on-premises machine translation models 110, 120 used in steps S3 and S4 are models that translate text data from one language to another. The on-premises machine translation models 110, 120 preferably leverages various computational techniques to understand and convert languages, aiming to capture not just the literal meaning but also the contextual and idiomatic nuances of both the source and target languages. Various machine translation technologies are available and could be used for the models 110, 120, including rule-based models, which use predefined linguistic rules and dictionaries, statistical models, which analyze large datasets of existing translations to identify patterns, and neural models that employ deep learning techniques to improve translation quality by considering entire sentences rather than just individual words. The on-premises machine translation models 110, 120 preferably enable real-time processing to translate text data in steps S3 and S4 in real-time.

The first and second on-premises machine translation models 110, 120 used in steps S3 and S4 enable a technically robust and independent verification of the accuracy of the translation. This is possible since the two on-premises machine translation models 110, 120 are separate on-premises machine translation models trained on different datasets. Accordingly, the two on-premises machine translation models 110, 120 enables an independent verification of the accuracy of translation.

The on-premises speech synthesis model 130 converts text into spoken speech or voice output. It uses algorithms and/or machine learning methods to generate synthetic speech that closely mimics human speech. In an embodiment, on-premises speech synthesis model 130 processes the input text, converting it into a format that can be understood. This includes, for instance, handling numbers, abbreviations, punctations, etc. The text is then converted into phonetic representations, which indicate how words should be pronounced. Finally, the on-premises speech synthesis model 130 synthesizes the speech using, for instance, concatenative methods by stringing together recorded speech segments, or, preferably, parametric methods by generating speech based on acoustic models. The on-premises speech synthesis model 130 preferably enables real-time processing to synthesize the speech data in step S6 or S7 in real-time.

In an embodiment, the method as shown in Figs. 1 or 2 preferably comprises recording the speech spoken in the source language in step S1.

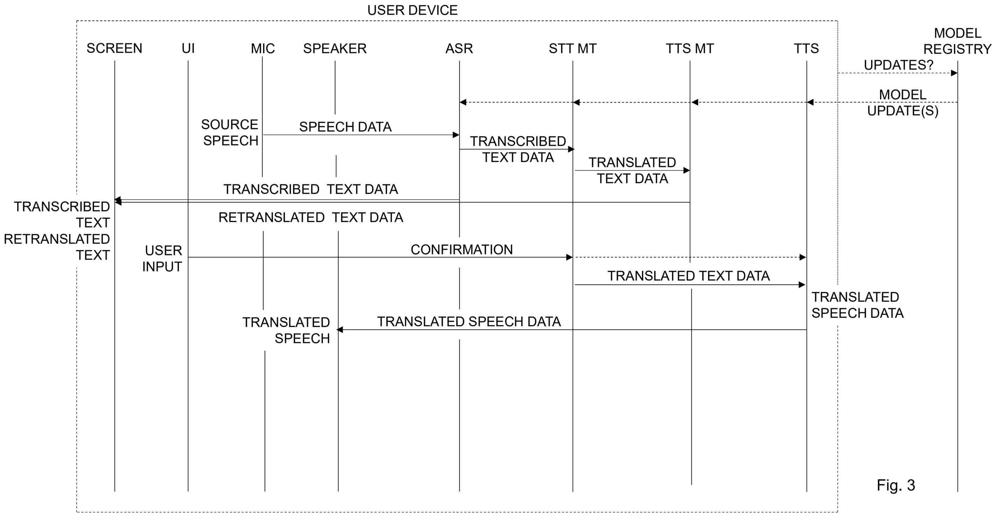

Fig. 3 schematically illustrates the data flow in a CI STS translation method according to an embodiment. In this embodiment, the models are implemented on-device in a user device 1.

In an optional embodiment, the user device 1 could contact a remote model registry to check whether there are any updates for the on-device speech recognition model 100, the on-device machine translation models 110, 120, and/or the on-device speech synthesis model 130. Such updates could, for instance, be in the form of updated language models used by the on-device machine translation models 110, 120 or download of new models generated for particular combination(s) of source and target languages. Such a model update could be in the form of updating none, one or multiple, i.e., at least two, of the on-premises models 100, 110, 120, 130 hosted on the user device 1.

A speaker or user then uses the user device 1, and in particular a microphone 10 of the user device 1, see Fig. 10, to record the speech as spoken in a source language. An audio signal or file containing the speech data is generated and input to the on-device speech recognition model 100, represented by automatic speech recognition (ASR) in Fig. 3. The on-device speech recognition model 100 transcribes the speech into transcribed text data in the source language. This transcribed text data is input to the first on-device machine translation model 110, represented by source-to-target machine translation (STT MT) in Fig. 3. The first on-device machine translation model 110 translates the transcribed text data into translated text data in the target language. The translated text data is input to the second on-device machine translation model 120, represented by target-to-source machine translation (TTS MT) in Fig. 3. The second on-device machine translation model 120 reverse translates the translated text data into retranslated text data in the source language. The transcribed text data and the retranslated text data are then output for display on a screen 30 of the user device 1 as shown in Fig. 12. The screen 30 thereby displays the transcribed text and the retranslated text, both in the source language, for the speaker. The speaker can then compare the two displayed texts to see whether they match, i.e., are identical or at least have the same meaning in the source language and that the transcription is acceptable. The speaker can then activate a user interface (UI) of the user device 1, such as press a key, or press a given area of a touch-sensitive screen 30, if he/she is of the opinion that two displayed texts match and the transcription is acceptable. The user interface generates, upon activation, a user confirmation.

In an embodiment, this user confirmation triggers or induces the on-device speech synthesis model 130, represented by text-to-speech (TTS) in Fig. 3, to synthesize translated speech data in the target language based on the translated text data. The translated speech data is then output to a speaker 20 of the user device 1, which plays back the translated speech for a listener.

In another embodiment, the on-device speech synthesis model 130 synthesizes the translated speech data based on the translated text data independent on the user confirmation. In this embodiment, the translated speech data is, however, only sent to the speaker 20 for play back in response to the user confirmation.

In an embodiment, not only the transcribed text and the retranslated text but also the translated text is displayed on the screen 30 of the user device 1.

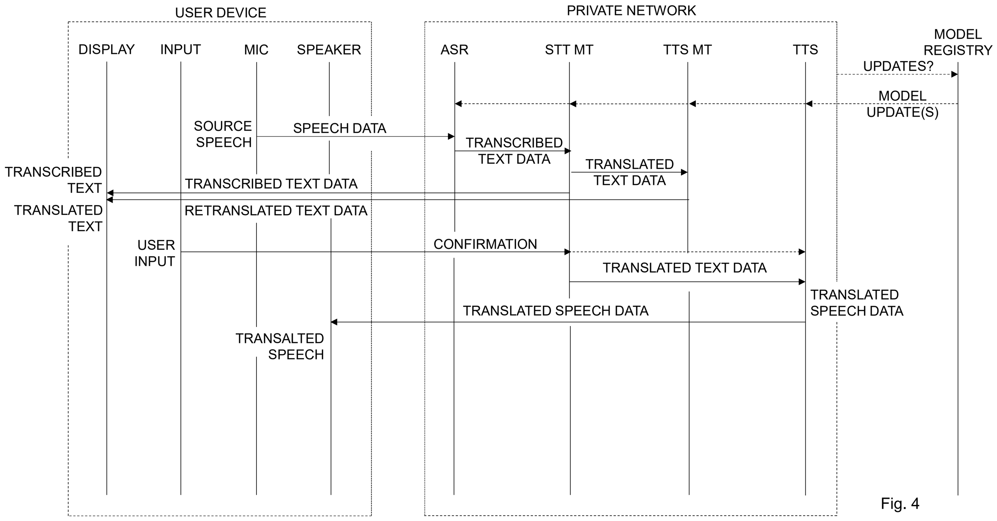

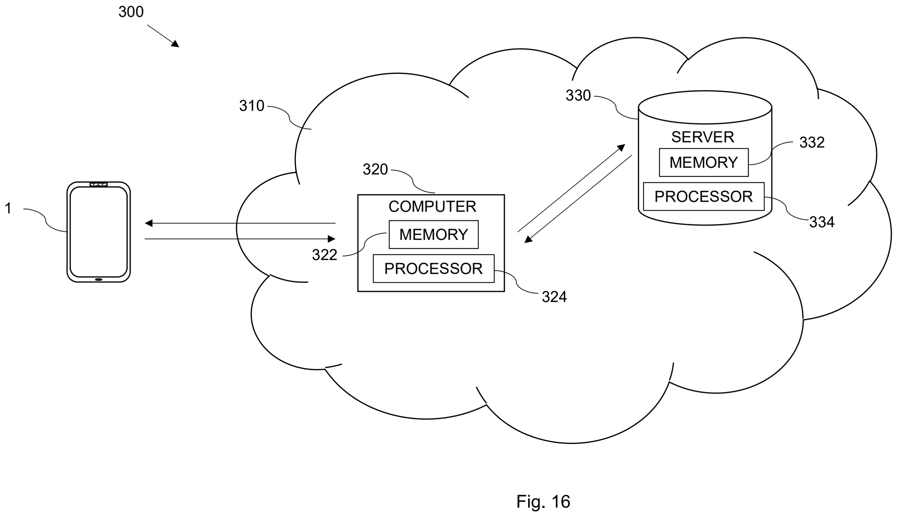

Fig. 4 schematically illustrates data flow in a CI STS translation method according to another embodiment. In this embodiment, the models 100, 110, 120, 130 are implemented within a private cloud or network of, to which the user device 1 is connected. Such an implementation could be referred to a system-implementation within a system 300 as shown in Fig. 16 and further described herein.

In an optional embodiment, the models are updated from a model registry as discussed in the foregoing in connection with Fig. 3.

A speaker then uses a microphone 10 of the user device 1 to record the speech as spoken in a source language. An audio signal or file containing the speech data is generated and transmitted over the private network to the on-premises speech recognition model 100. The on-premises speech recognition model 100 transcribes the speech into transcribed text data in the source language. This transcribed text data is input to the first on-premises machine translation model 110. The first on-premises machine translation model 110 translates the transcribed text data into translated text data in the target language. The translated text data is input to the second on-premises machine translation model 120. The second on-premises machine translation model 120 reverse translates the translated text data into retranslated text data in the source language. The transcribed text data and the retranslated text data, and optionally the translated text, are then transmitted over the private network to the user device 1 for display on a screen 30 of the user device 1. The screen 30 thereby displays the transcribed text and the retranslated text, both in the source language, for the speaker and optionally also the translated text in the target language. The speaker can then compare the two displayed texts to see whether they match, i.e., are identical or at least have the same meaning in the source language and whether the transcription is acceptable. The speaker can then activate a user interface of the user device 1, such as press a key, or press a given area of a touch-sensitive screen 30, if he/she is of the opinion that two displayed texts match and the transcription is acceptable. The user interface generates, upon activation, a user confirmation. This user confirmation is transmitted by the user device 1 over the private network to the private cloud, such as to the on-premises speech synthesis model 130 or the first on-premises machine translation model 110.

In an embodiment, this user confirmation triggers or induces the first on-premises machine translation model 110 to send the translated text data to the on-premises speech synthesis model 130 to synthesize the translated speech data in the target language based on the translated text data. The translated speech data is then transmitted over the private network to a speaker 20 of the user device 1, which plays back the translated speech for a listener.

In another embodiment, the on-premises speech synthesis model 130 synthesizes the translated speech data based on the translated text data independent on the user confirmation. In this embodiment, the translated speech data is, however, only sent over the private network to the speaker 20 for play back in response to the user confirmation.

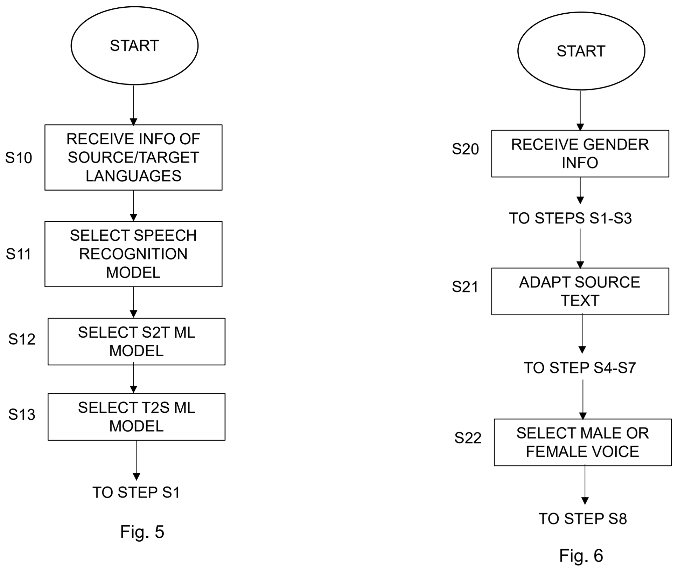

Fig. 5 is a flow chart illustrating additional steps of the method shown in Figs. 1 and 2 according to various embodiments. The methos starts, in an embodiment, in step S10, which comprises receiving information of the target language. A next step S12 then comprises selecting the first on-premises machine translation model 110 from a set 115 of multiple first on-premises machine translation models stored in the memory 40, 324, 334 based on the information of the target language. The embodiment also comprises selecting, in step S13, the second on-premises machine translation model 120 from a set 125 of multiple second on-premises machine translation models stored in the memory 40, 324, 334 based on the information of the target language.

For instance, the user can select the target language from a list of available target languages using the user device 1, such as by pressing a key or activating an area of a touch-sensitive screen 30. In this embodiment, the source language is presumed to be pre-selected, such as when first launching an STS service at the user device 1. This means that there are then different first and second on-premises machine translation models 110, 120 available that are adapted to different combinations of the source language and various target language, such as Swedish-to-Arabic, Arabic-to-Swedish, Swedish-to-English, English-to-Swedish, etc. with the source language exemplified by Swedish and the target languages exemplified by Arabic and English.

In a preferred embodiment, step S10 also comprises receiving information of the source language. In an optional embodiment, the method also comprises selecting, in step S11, the on-premises speech recognition model 100 from a set 105 of multiple on-premises speech recognition models stored in the memory 40, 324, 334 based on the information of the source language. In this embodiment, step S12 comprises selecting the first on-premises machine translation model 110 from the set 115 of multiple first on-premises machine translation models stored in the memory 40, 324, 334 based on the information of the target language and the information of the source language. Step S13 comprises, in this embodiment, selecting the second on-premises machine translation model 120 from the set 125 of multiple second on-premises machine translation models stored in the memory 40, 324, 334 based on the information of the target language and the information of the source language.

This embodiment enables the user to select not only the target language but also the source language to be used in the STS translation method. As an example, Swedish and English could be available as source languages, and Arabic, and French as target languages. In such a case, the first on-premises machine translation models 110 in the set 115 could include Swedish-to-Arabic, Swedish-to-French, English-to-Arabic and English-to-French language combinations, and the second on-premises machine translation models 120 in the set 125 could include Arabic-to-Swedish, French-to-Swedish, Arabic-to-English and French-to-English language combinations.

The user device 1 or the system 300 then have pre-downloaded first and second on-premises machine translation models 110, 120. If a particular first or second on-premises machine translation model 110, 120 for a given source and target language combination is not available on-device on the user device 1 or on-premises in the system 300, then it is preferably downloaded from a model registry as shown in Figs. 3 and 4. In such a case, the user device 1 or the system 300 needs to access the Internet in order to download the particular first and/or second on-premises machine translation model 110, 120 from the model registry.

The translation in step S3 and the reverse translation in step S4 in Fig. 1 or 2 preferably uses one first on-premises machine translation model 110 and one second on-premises machine translation model 120 to translate from the source-to-target language or from the target-to-source language. However, for some less common languages there might be no available first and second on-premises translation models 110, 120 in the model registry. However, it might still be possible to perform the translation through an intermediate language. For instance, assume that there is no first on-premises machine translation model 110 in the model registry that can translate from Swedish to Persian but the set 115 of first on-premises machine translation models 110 includes a first on-premises machine translation model 110 for translation from Swedish to English and another first on-premises machine translation model 110 for translation from English to Persian. In such a situation, the translation in step S3 could be performed in two sub steps, i.e., first from Swedish into English using one first on-premises machine translation model 110 and then from English to Persian using another first on-premises machine translation model 110. Such an approach can also be taken in step S4 when performing the reverse translation.

In an embodiment, the method comprises step S11 as shown in Fig. 5. In such an embodiment, there are multiple on-premises speech recognition models 100 available as a set 105. Hence, each such on-premises speech recognition model 100 is then adapted to transcribe speech in given language, i.e., the source language. If the user would like to use different spoken languages then multiple on-premises speech recognition models 100 need to be downloaded, if not already done, from the model registry to the user device 1 or to the system 300.

In another embodiment, the on-premises speech recognition model 100 is able to transcribe speech spoken in different languages and so there is no need for a set 105 of multiple on-premises speech recognition models 100. In such an embodiment, step S11 could be omitted. Alternatively, the on-premises speech recognition model 100 could use different language models during speech transcription and where each such language model is adapted for a given speech language. In such a case, step S11 in Fig. 5 could comprise selecting a speech model from a set of multiple speech models based on the information of the source language and where the selected speech model is used by the on-premises speech recognition model 100 to transcribe the speech in the source language into the transcribed text in step S2 in Figs. 1 and 2.

In an embodiment, there are multiple on-premises speech synthesis models 130 available as a set 135. Hence, each such on-premises speech synthesis model 130 is then adapted to synthesize speech in a given language, i.e., the target language. If the user would like to use different spoken languages then multiple on-premises speech synthesis models 130 need to be downloaded, if not already done, from the model registry to the user device 1 or the system 300.

In another embodiment, the on-premises speech synthesis model 130 is able to synthesize speech in different languages and so there is no need for a set 135 of multiple on-premises speech synthesis models 130. Alternatively, the on-premises speech synthesis model 130 could use different language models during speech transcription and where each such language model is adapted for a given speech language.

In some languages, such as Ukrainian, Russian, Arabic, etc. the verb and the adjectives change based on the gender of the person speaking and the person spoken to. To make the translation more inclusive, the user could select the genders as either male or female. This information is used during the STS translation process. For instance, for Arabic, where semi-vowels are not written but are necessary for speech to identify the correct gender.

In an embodiment, the method comprises step S20 as shown in Fig. 6. This step S20 comprises receiving gender information of a gender of a listener or addressee. The method then continues to steps S1 to S3 in Fig. 1 or 2. This embodiment also comprises on-premises adapting, in step S21, the translated text data into gender-specific translated text data based on genders-specific linguistic rules selected based on the information of the gender of the listener. The method then continues to step S4 in Fig. 1 or 2. In this embodiment, step S6 in Fig. 1 and step S7 in Fig. 2 comprises synthesizing, using the on-premises speech synthesis model 130, the translated speech data in the target language based on the gender-specific translated text data.

In an embodiment, step S20 comprises receiving information not only of the gender of the listener but also information of the gender of the speaker.

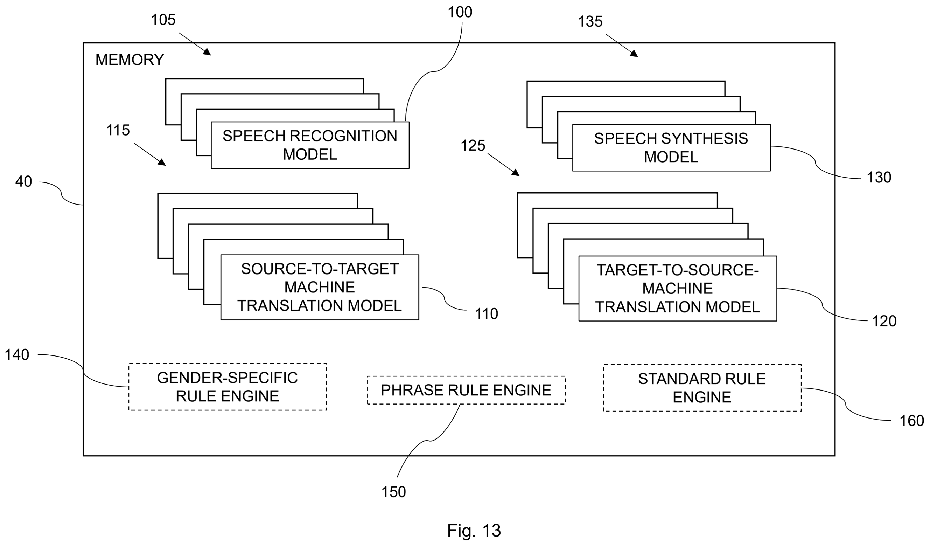

The user device 1 or the system 300 could then have a gender-specific rule engine 140, see Fig. 13, which is configured to determine or select, for instance, grammatical structures, verb conjugations and/or pronouns required for the target language based on the specified gender(s). These grammatical structures, verb conjugations and/or pronouns, collectively referred herein as genders-specific linguistic rules, are then used to dynamically adapt the translated text data output from the first on-premises machine translation model 110. In such an embodiment, the gender information as received in step S20 is also used during speech synthesis in step S6 in Fig. 1 and step S7 in Fig. 2 to incorporate gender-specific pronunciation and/or tonal adjustments where linguistically appropriate.

As mentioned above, in an embodiment, step S20 comprises receiving gender information of a gender of a speaker. In such an embodiment, the method comprises step S22 as shown in Fig. 6, which comprises selecting a male voice or a female voice based on the gender information of the speaker. The method then continues to step S8 in Fig. 1 or 2, which comprises playing back, in response to the user confirmation and in the selected male voice or female voice, the translated speech in the target language based on the translated speech data in the target language.

In an embodiment, the method comprises tagging the transcribed text data with at least one gender marker representing the gender of the listener or addressee and/or of the speaker. The transcribed text data is then translated in step S3 into the translated text data in the target language using the first on-premises machine translation model 110. In this embodiment, the method also comprises processing the first translated text data into gender-specific first translated text data based on genders-specific linguistics rules.

In an embodiment, a gender-specific translation of the transcribed text data could be implemented as a combination of genders-specific linguistic rules and adding gender markers to the transcribed text data. For instance, pronouns that are referring to the speaker and/or to the listener (addressee) and are present in the transcribed text data could be identified using a language processing algorithm and then gender markers that help the translation model to produce gender-specific (gendered) translated text data are added. A language processing algorithm can then be used in a post-processing step to remove all traces of those gender markers.

As an example, there are four different Arabic translations of transcribed text data in the form of "/ am *so happy that you are feeling better"* depending on the gender of the speaker and the gender of the listener (addressee), i.e., a male-to-male translation, a male-to-female translation, a female-to-male translation and a female-to-female translation. In such a case, gender markers could be added to define the gender of the speaker, i.e., whether "I" in the sentence above is a male or female, and/or the gender of the listener (addressee), i.e., whether "you" in the sentence above is a male or a female. As an illustrative, but non-limiting, example the above-mentioned transcribed text data could be tagged with two gender markers to obtain gender-tagged transcribed text data in the form of *"Sir*/*Madam,* / *as* a *man*/*woman am so happy that you are feeling better'.* The gender marker "sir" or "madam" then represents the gender of the listener (addressee) and the gender marker "as a man" or "as a woman" represents the gender of the speaker. These gender markers bias the machine translation model to correctly translate the sentence depending on the genders of the speaker and the listener (addressee). After translation, the translation markers are identified in the translated text data and removed therefrom to obtain gender-specific translated text data.

In an embodiment, the method comprises identifying any pronouns referring to the listener (addressee) and/or the speaker in the transcribed text data, preferably using a language processing algorithm. In this embodiment, tagging the transcribed text data comprises tagging or adding the at least one gender markers to the transcribed text data, such as to the identified pronouns. In this embodiment, step S3 comprises translating the transcribed text data into the first translated text data in the target language using the first on-premises machine translation model 110 based on the at least one gender marker. In this embodiment, processing the translated text data comprises removing a translated version or versions of the at least one gender marker from the first translated text data, preferably using the genders-specific linguistic rules, to obtain the gender-specific first translated text data.

In an embodiment, the at least one gender marker is generated based on the gender of the listener (addressee) and/or the gender of the speaker. These gender markers thereby guide the machine translation model to make a gender-accurate translation of the transcribed text data so that the translated speech will be accurately played back given the actual gender of the speaker and the gender of the listener.

In an embodiment, processing the first translated text comprises adapting, preferably on-premises processing, the first translated text data into the gender-specific first translated text data based on a gender-specific rule engine 140 defining the genders-specific linguistic rules selected based on the information of the gender of the listener (addressee) and/or the speaker.

The translation in step S3 could be improved by context-aware translation adjustment using a rule engine. For instance, the transcribed text could be analyzed to identify words or phrases that labeled as hard to translate. In such a case, uncommon, ambiguous or domain-specific terms in the transcribed text could be replaced with pre-defined substitutions using a rule engine. The so-adjusted transcribed text data can then be translated in step S3 into the translated text data. Post-translation adjustments could then be applied to the translated text data based on the context using the rule engine.

In an embodiment, the rule engine comprises pre-configured rules for, for instance, domain-specific terminology substitutions, such as healthcare-specific terminology, gender-specific terminology substitutions and/or culturally-specific terminology substitutions.

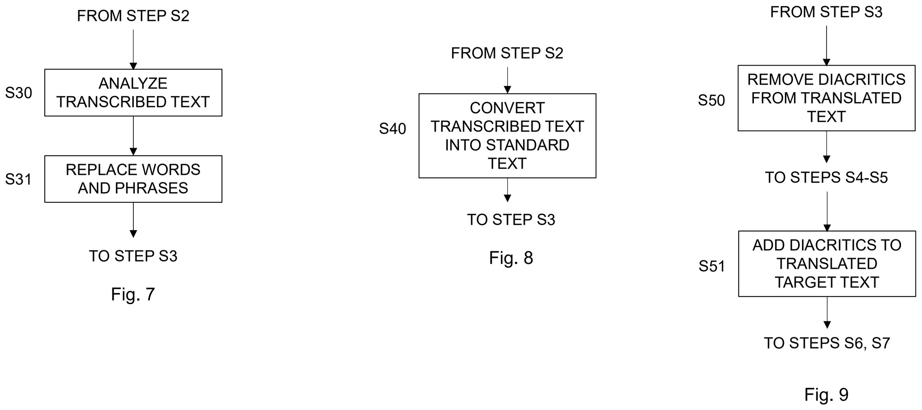

In an embodiment, the method comprises additional steps S30 and S31 as shown in Fig. 7. The method continues from step S2 in Fig. 1 or 2. A next step S30 comprises analyzing the transcribed text data using an on-premises rule engine 150, see Fig. 13, to identify words or phrases that are labelled hard to translate. The embodiment also comprises replacing, in step S31, any identified words or phrases labelled as hard to translate in the transcribed text with pre-defined substitutions using an on-premises rule engine 150 to obtain adjusted transcribed text data in the source language. The method then continues to step S3 in Fig. 1 or 2, which comprises, in this embodiment, translating the adjusted transcribed text data into the translated text data in the target language using the first on-premises machine translation model 110.

In an embodiment, the words or phrases that are labelled as hard to translate are selected from the group consisting of idiomatic expressions, domain-specific terms and words and phrases not part of the training data used to train the first on-premises machine translation model 110.

Domain-specific terms as used herein include domain-specific vocabulary that includes words, terms and phrases that are unique or at least specific to a particular field or subject. As an example, the domain could be the medical domain that includes healthcare specific terms.

Fig. 8 is a flow chart illustrating an additional step of the method in Fig. 1 or 2 according to an embodiment. The method then continues from step S2 in Fig. 1 or 2. A next step S40 comprises converting the transcribed text data in the source language into standard text data in a standard version of the source language. The method then continues to step S3 in Fig. 1 or 2, which, in this embodiment, comprises translating the standard transcribed text data into the translated text data in the target language using the first on-premises machine translation model 110.

In an embodiment, step S40 comprises converting the transcribed text data in the source language into the standard transcribed text data in the standard version of the source language by replacing dialect-specific words or expressions with standard words or expressions in the source language.

This embodiment thereby performs a dialect to standard language conversion prior to translation of the transcribed text data. For instance, written text in Arabic is most often in modern standard Arabic (MSA), however, the spoken language is in dialect Arabic. The transcribed text data will thereby be in the dialect Arabic used by the speaker. This transcribed text is then converted in step S40 into MSA prior to translation to a target language.

The user device 1 or the system 300 then preferably has a standard rule engine 160, see Fig. 13, configured to convert the transcribed text data into the standard transcribed text data in step S40 in Fig. 8. This standard rule engine 160 may, in an embodiment, be implemented as a machine learning model.

Fig. 9 is a flow chart illustrating additional steps of the method in Fig. 1 or 2 according to an embodiment. The method then continues form step S3 in Fig. 1 or 2. A next step S50 comprises removing diacritics from the translated text data in the target language to obtain diacritics-free translated text data in the target language. The method then continues to steps S4-S5 in Fig. 1 or 2. The method further comprises step S51 of Fig. 9, which comprises adding diacritics to the diacritics-free translated text data in the target language to obtain translated text data with diacritics in the target language. The method continues to step S6 in Fig. 1 or step S7 in Fig. 7, which comprises, in this embodiment, synthesizing, using the on-premises speech synthesis model 130, the translated speech data in the target language based on the translated text data with diacritics.

Diacritics are special marks added to letters in a language to alter their pronunciation or to distinguish between similar words. They can indicate various features, such as tone, stress, or vowel quality. Diacritics are essential for clarity and meaning in many languages, as they can change the meaning of words entirely.

The diacritics are, in an embodiment, removed in step S50 from the translated text data. The reason for removing diacritics from the translated text data is that any diacritics added by the first on-premises machine translation model 110 might not be accurate. Thus, any diacritics in the translated text data as generated by the on-premises machine translation model 110 is thereby preferably removed. An on-premises diacritization model or rule engine could then be used to re-introduce diacritics into the diacritics-free translated text data prior to speech synthesis in step S6 in Fig. 1 or step S7 in Fig. 7.

The STS translation method enables a user verification of the translation and transcription by displaying the transcribed text and the retranslated text to the used on the screen 30 of the user device 1. The transcribed text can thereby be checked by the user to verify that the transcription in step S2 correctly transcribed the speech spoken in the source language. Further, the retranslated text can be compared to the transcribed text to verify whether the two texts matches, i.e., are identical or at least have the same or similar meaning in the source language.

The accuracy of the transcription in step S2 could also be verified by audio if the user has reading difficulties. In such an embodiment, step S6 in Fig. 1 or a separate synthesizing step between steps S5 and S6 in Fig. 2 comprises synthesizing, using an on-premises speech synthesis model 120, transcribed speech data in the source language based on the transcribed text data. Transcribed speech in the source language is then played back based on the transcribed speech data.

This embodiment thereby also synthesizes the transcribed text data into speech data. This speech data could, when played back to the user, be used to verify accuracy of the transcription in step S2. In other words, the user could verify that the played back speech matches, i.e., is identical or at least has the same or similar meaning in the source language, as the speech previously spoken in the source language by the user and recorded in step S1.

In an embodiment, the user confirmation used in step S7 in Fig. 1 or step S6 in Fig. 2 could thereby be a user confirmation of the accuracy of both the translation and the transcription. In another embodiment, the user has to confirm both the accuracy of the translation and the accuracy of the transcription in step S7 in Fig. 1 or step S6 in Fig. 2. In such an embodiment, step S8 preferably plays back the translated speech only in response to both these user confirmations.

The STS translation method could be implemented as an application (app) or software running locally within a user device 1 or could be a distributed software within a private or local cloud or network that is accessed by an app or software implemented in a user device 1. The STS translation method include four main computer-implemented models:
- Speech-to-text (Automated Speech Recognition), where a voice recorded through a microphone 10 is transcribed to text. The microphone 10 could be built-in to the user device 1 or connected via cable or wirelessly;
- Machine translation, where the text in the source language is translated to a target language;
- Text-to-speech (Speech Synthesis), where a text is converted into speech that can be listened through the internal speakers 20 of the user device 1 or connected external speakers; and
- Reverse machine translation, where the text in the target language is translated back to the source language using a separate machine learning model.

The STS translation method enables user verification of the outcomes of the method steps to guarantee accuracy of the STS translation method. Firstly, the transcribed audio can be verified by the user reading the transcribed text as displayed on the screen 30 of the user device 1. For speakers with reading difficulties, the transcribed text may also converted to speech. Using either of the text or the audio, the user can verify if the audio was transcribed correctly.

Further, the translated text is converted back to the source language and shown to the speaker directly under the translation. This "reverse" translation is also synthesized into speech. With both the reverse translated text and its audio, the speaker can verify if the original audio is translated correctly or not.

For the scenarios where the user does not confirm the accuracy of the translation and optionally the transcription, the speaker can either re-record, or edit the original transcribed message using a user interface of the user device 1. The process can be repeated until the speaker is satisfied with the transcription and the translation results. If the speaker is satisfied with the translation result, the speaker can play the audio of the translation.

The invention provides real-time speech-to-speech (STS) translation, featuring advanced mechanisms for accuracy verification, context-aware adaptation, and language-specific adjustments. A key feature of the invention is the reverse translation process, which enhances translation accuracy by dynamically translating output text back into the source language. This reverse translation allows users to compare the transcribed input and reverse-translated output to ensure the intended meaning is preserved, especially in sensitive applications such as healthcare and professional communication.

The invention may further integrate a rule engine to pre-emptively adjust uncommon or domain-specific terms in the input, facilitating more accurate translations. For Arabic-language processing, the invention may transcribe dialectal Arabic into Modern Standard Arabic (MSA), remove diacritics during processing, and restore them via a dedicated text-to-diacritized-text model for grammatically correct and gender-sensitive synthesis. Additionally, a gender-adaptive module tailors translations and synthesized speech to reflect speaker-specific linguistic rules.

These innovations, combined with privacy-preserving deployment options (on-device or within private cloud infrastructure), provide a robust solution for real-time, context-aware, and accurate multilingual communication.

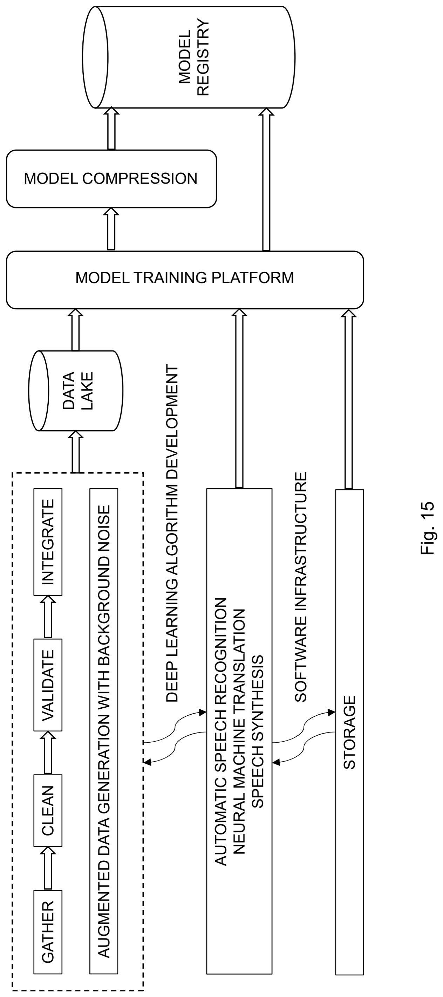

Fig. 15 illustrates an embodiment of training models used in the STS translation method. Labeled data is used to create translation and speech recognition models 100, 110, 120, 130. Data from various sources could be used in the creation and training of the models 100, 110, 120, 130. As an example, Mozilla Common Voice (MCV), an open source voice dataset, can be used as a source of speech or voice data. SNOMED (distributed by Socialstyrelsen in Sweden) is a standard repository of the clinical terms. This database can be used to obtain domain-specific terms or expressions within the healthcare domain. The medicine names could be obtained via the publicly available portals by Medical Product Agencies. For translation, both publicly available datasets and specifically generated datasets could be used. As an example, datasets can be generated via ChatGPT and verified for correctness by licensed medical professionals. These dialogs are then translated into various languages using authorized translators and reviewed by at least two native speakers.

The data is preferably cleaned, normalized and integrated into a data lake by a data pipeline. Audio data is also augmented by adding background noises. The training platform then picks the clean data from the data lake, training algorithms, and other related tools to train the models 100, 110, 120, 130. These models 100, 110, 120, 130 may also be compressed using standard "model quantization" methods and, where applicable, divided into smaller parts. Both the compressed and the uncompressed models 100, 110, 120, 130 are preferably kept in a model registry or repository. The app may then check the model registry for any updates and downloads the latest model(s) 100, 110, 120, 130 in the app or to the private cloud. These models 100, 110, 120, 130 are then used in the app or the system 300 and provide the offline translation and voice recognition feature.

The models 100, 110, 120, 130 may be implemented according to various embodiments. For instance, the models 100, 110, 120, 130 are computer-implemented models 100, 110, 120, 130 and could be in the form machine learning (ML) models 100, 110, 120, 130. Generally, ML algorithms build a mathematical model based on training data, i.e., input voice and text data, in order to make predictions or decisions without being explicitly programmed to do so. There are various types of ML algorithms that differ in their approach, the type of data they input and output, and the type of task or problem that they are intended to solve. Illustrative, but non-limiting, examples of such ML algorithms include supervised learning algorithms, unsupervised learning algorithms, semi-supervised learning algorithms, reinforcement learning algorithms, self-learning algorithms, feature learning algorithms, sparse dictionary learning algorithms, anomaly detection algorithms, and association rule learning algorithms.

Performing machine learning involves creating a model, which is trained on training data and can then process additional data to make predictions or decisions. Various types of ML models could be used according to the embodiments, including, but not limited to, artificial neural networks, decision trees, support vector machines, regression analysis, Bayesian networks and Genetic algorithms.

Furthermore, deep learning, also known as deep structured learning, is a ML method based on artificial neural networks with representation learning. Learning can be supervised, semi-supervised or unsupervised. Deep learning architectures, such as deep neural networks, deep belief networks, recurrent neural networks and convolutional neural networks, could be used to train and implement the ML models 100, 110, 120, 130. "Deep" in deep learning comes from the use of multiple layers in the network. Deep learning is concerned with an unbounded number of layers of bounded size, which permits practical application and optimized implementation, while retaining theoretical universality under mild conditions. In deep learning the layers are also permitted to be heterogeneous and to deviate widely from biologically informed connectionist models, for the sake of efficiency, trainability and understandability.

As mentioned in the foregoing, in some languages the verb and the adjectives change based on the gender of the person speaking and the person spoken to. To make the translation more inclusive, the user could select the genders as either male or female. This information is used during the STS translation process.

The present disclosure also defines a computer-implemented speech-to-speech translation method performed by a processor 50, 324, 334. The method comprising receiving gender information of a gender of a listener or addressee and/or of a speaker. The method also comprises transcribing speech spoken in a source language into transcribed text data in the source language using a speech recognition model, preferably an on-premises speech recognition model 100 stored in a memory 40, 322, 332 connected to the processor 50, 324, 334. The method further comprises tagging the transcribed text data with at least one gender marker representing the gender of the listener or addressee and/or of the speaker. The method also comprises translating the transcribed text data into translated text data in a target language using a machine translation model, preferably an on-premises machine translation model 110 stored in the memory 40, 322, 332. The method additionally comprises processing, preferably on-premises processing, the translated text data into gender-specific translated text data based on genders-specific linguistic rules. The method further comprises synthesizing, using a speech synthesis model, preferably an on-premises speech synthesis model 130 stored in the memory 40, 322, 332, translated speech data in the target language based on the gender-specific translated text data. The method further comprises playing back translated speech in the target language based on the translated speech data in the target language.

In an embodiment, the method also comprises displaying, on a screen 30 of a user device, a translated text based on the gender-specific translated text data.

In an embodiment, the method further comprising recording the speech spoken in the source language.

In an embodiment, the method also comprises receiving gender information of a gender of a speaker, and selecting a male voice or a female voice based on the gender information of the speaker. In such an embodiment, playing back comprises playing back, in the selected male voice or female voice, the translated speech in the target language based on the translated speech data in the target language.

In an embodiment, a gender-specific translation of the transcribed text data could be implemented as a combination of genders-specific linguistic rules and adding gender markers to the transcribed text data. For instance, pronouns that are referring to the speaker and/or to the listener (addressee) and are present in the transcribed text data could be identified using a language processing algorithm and then gender markers that help the translation model to produce gender-specific (gendered) translated text data are added. A language processing algorithm can then be used in a post-processing step to remove all traces of those gender markers.

As an example, there are four different Arabic translations of transcribed text data in the form of "/ am *so happy that you are feeling better'* depending on the gender of the speaker and the gender of the listener (addressee), i.e., a male-to-male translation, a male-to-female translation, a female-to-male translation and a female-to-female translation. In such a case, gender markers could be added to define the gender of the speaker, i.e., whether "I" in the sentence above is a male or female, and/or the gender of the listener (addressee), i.e., whether "you" in the sentence above is a male or a female. As an illustrative, but non-limiting, example the above-mentioned transcribed text data could be tagged with two gender markers to obtain gender-tagged transcribed text data in the form of *"Sir*/*Madam,* / *as* a *man*/*woman am so happy that you are feeling better'.* The gender marker "sir" or "madam" then represents the gender of the listener (addressee) and the gender marker "as a man" or "as a woman" represents the gender of the speaker. These gender markers bias the machine translation model to correctly translate the sentence depending on the genders of the speaker and the listener (addressee). After translation, the translation markers are identified in the translated text data and removed therefrom to obtain gender-specific translated text data.

In an embodiment, the method comprises identifying, preferably on-premises identifying, any pronouns referring to the listener (addressee) and/or the speaker in the transcribed text data preferably using a language processing algorithm. In this embodiment, tagging the transcribed text data comprises tagging or adding, preferably on-premises tagging or adding, the at least one gender markers to the transcribed text data, such as to the identified pronouns. In this embodiment, translating the transcribed text data comprises translating the transcribed text data into the translated text data in the target language using the machine translation model, preferably the on-premises machine translation model 110, based on the at least one gender marker. In this embodiment, processing the translated text data comprises removing, preferably on-premises removing, a translated version or versions of the at least one gender marker from the translated text data, preferably using the genders-specific linguistic rules, to obtain the gender-specific translated text data.

In an embodiment, the at least one gender marker is generated based on the gender of the listener (addressee) and/or the gender of the speaker. These gender markers thereby guide the machine translation model to make a gender-accurate translation of the transcribed text data so that the translated speech will be accurately played back given the actual gender of the speaker and the gender of the listener.

In an embodiment, processing the translated text comprises adapting, preferably on-premises processing, the translated text data into the gender-specific translated text data based on a gender-specific rule engine 140 defining the genders-specific linguistic rules selected based on the information of the gender of the listener (addressee) and/or the speaker.

In an embodiment, the gender-specific rule engine 140 is configured to determine or select at least one of grammatical structures, verb conjugations and pronouns for the target language based on the information of the gender of the listener (addressee) and/or of the speaker.

In an embodiment, the grammatical structures, verb conjugations and/or pronouns, collectively referred herein as genders-specific linguistic rules, are used to dynamically adapt the translated text data output from the machine translation model 110.

In an embodiment, the speech synthesis is performed based on the information of the gender of the listener to incorporate gender-specific pronunciation and/or tonal adjustments where linguistically appropriate and where such gender-specific pronunciation and/or tonal adjustments have been identified by the gender-specific rule engine 140 based on the information of the gender of the listener.

The disclosure also defines a user device 1. The user device 1 comprises a microphone 10 configured to record speech, a speaker 20 configured to play back speech, a screen 30, a memory 40 comprising a speech recognition model 100, a machine translation model 110, and a speech synthesis model 130, and a processor 50. The processor 50 is configured to transcribe speech spoken in a source language and recorded by the microphone 10 into transcribed text data in the source language using the speech recognition model 100. The processor 50 is also configured to tag the transcribed text data with at least one gender marker representing a gender of a listener or addressee and/or of a speaker. The processor 50 is further configured to translate the transcribed text data into translated text data in a target language using the machine translation model. The processor 50 is further configured to process the translated text data into gender-specific translated text data based on genders-specific linguistic rules. The processor 50 is also configured to synthesize, using the speech synthesis model 130, translated speech data in the target language based on the gender-specific translated text data. The processor 50 is additionally configured to control the speaker 20 to play back speech in the target language based on the translated speech data in the target language.

In an embodiment, the processor 50 is also configured to display, on a screen 30 of the user device 1, a translated text based on the gender-specific translated text data.

In an embodiment, the user device 1 comprises a user interface. In such an embodiment, the processor 50 is configured to generate the information of the gender of the listener based on activation of the user interface.

In an embodiment, the processor 50 is configured to identify any pronouns referring to the listener (addressee) and/or a speaker in the transcribed text data preferably using a language processing algorithm. In this embodiment, the processor 50 is configured to tag or add the at least one gender markers to the transcribed text data, such as to the identified pronouns. In this embodiment, the processor 50 is further configured to translate the transcribed text data into the translated text data in the target language using the machine translation model based on the at least one gender marker. In this embodiment, the processor 50 is additionally configured to remove a translated version or the versions of the at least one gender marker from the translated text data, preferably using genders-specific linguistic rules, to obtain the gender-specific translated text data.

In an embodiment, the processor 50 is also configured to generate gender information of a gender of a speaker based on activation of the user interface. In this embodiment, the processor 50 is also configured to select a male voice or a female voice based on the gender information of the speaker. In such an embodiment, processor 50 is configured to control the speaker 20 to play back, in the selected male voice or female voice, the translated speech in the target language based on the translated speech data in the target language.

In an embodiment, the memory 40 comprises a gender-specific rule engine 140 defining the genders-specific linguistic rules selected based on the information of the gender of the listener. In such an embodiment, the processor 50 is configured to adapt the translated text data into the gender-specific translated text data based on the gender-specific rule engine 140 and the information of the gender of the listener.

In an embodiment, the gender-specific rule engine 140 is configured to determine or select at least one of grammatical structures, verb conjugations and pronouns for the target language based on the information of the gender of the listener.

In an embodiment, the grammatical structures, verb conjugations and/or pronouns, collectively referred herein as genders-specific linguistic rules, are used by the processor 50 to dynamically adapt the translated text data output from the machine translation model 110.

In an embodiment, the processor 50 is configured to perform the speech synthesis based on the information of the gender of the listener to incorporate gender-specific pronunciation and/or tonal adjustments where linguistically appropriate and where such gender-specific pronunciation and/or tonal adjustments have been identified by the gender-specific rule engine 140 based on the information of the gender of the listener.

Another aspect of the invention relates to a user device 1, see Figs. 10, 11 and 13. The user device 1 comprises a microphone 10 configured to record speech, a speaker 20 configured to play back speech, a screen 30, a memory 40 comprising a speech recognition model 100, a first machine translation model 110, a second machine translation model 120 and a speech synthesis model 130, and a processor 50. The processor 50 is configured to transcribe speech spoken in a source language and recorded by the microphone 10 into transcribed text data in the source language using the speech recognition model 100. The processor 50 is also configured to translate the transcribed text data into translated text data in a target language using the first machine translation model 110 and reverse translate the translated text data into retranslated text data in the source language using the second machine translation model 120 that is different than the first machine translation model 110. The processor 50 is further configured to display, on the screen 30, a transcribed text based on the transcribed text data and a retranslated text based on the retranslated text data. The processor 50 is also configured to synthesize, using the speech synthesis model 130, speech data in the target language based on the translated text data. The processor 50 is additionally configured to control, in response to a user confirmation, the speaker 20 to play back speech in the target language based on the speech data in the target language.

The microphone 10 and/or the speaker 20 could be integrated in the user device 1 or be connected, wirelessly or by wired, to the user device 1.

The user device 1 preferably comprise a user interface that can be used by a user to generate the user confirmation. The user interface could, for instance, be in the form of one or more keys (not shown) of the user device 1. Alternatively, the screen 30 could be in the form of a touch-sensitive screen 30 and can thereby be used by the user to generate the user confirmation.

The user device 1 could, for instance, be in the form of a smartphone, a tablet, a computer or a laptop. The user device 1 is preferably a portable user device 1, and in particular a smartphone or tablet. In such an embodiment, the STS translation could be implemented as an app or software on the user device 1.

The various embodiments described in the foregoing for the STS translation method also apply to the user device 1.

In an embodiment, the processor 50 is configured to display, on the screen 30, the transcribed text, the retranslated text and a translated text based on the translated text data.

In an embodiment, the processor 50 is configured to synthesize, in response to the user confirmation and using the on-device speech synthesis model 130, the translated speech data in the target language based on the translated text data.

In an embodiment, the processor 50 is configured to select the first machine translation model 110 from a set 115 of multiple first machine translation models based on information of the target language and select the second machine translation model 120 from a set 125 of multiple second machine translation models based on the information of the target language. The information of the target language can be generated in response to activation of the user interface.

In an embodiment, the processor 50 is configured to select the speech recognition model 100 from a set 105 of multiple speech recognition models based on information of the source language. In this embodiment, the processor 50 is also configured to select the first machine learning model 110 from the set 115 of multiple first on-device machine translation models 115 based on the information of the target language and the information of the source language, and select the second on-device machine learning model 120 from the set 125 of multiple second on-device machine translation models based on the information of the target language and the information of the source language. The information of the source language can be generated in response to activation of the user interface.

In an embodiment, the memory 40 comprises gender-specific linguistic rules. In such an embodiment, the processor 50 is configured to adapt the translated text data into gender-specific translated text data based on the gender-specific linguistic rules selected based on information of the gender of the listener. The processor 50 is also configured to synthesize, using the speech synthesis model 130, the translated speech data in the target language based on the gender-specific translated text data. The gender information can be generated in response to activation of the user interface.

In an embodiment, the processor 50 is configured to tag the transcribed text data with at least one gender marker representing the gender of the listener or addressee and/or of the speaker. In this embodiment, the processor 50 is also configured to process the first translated text data into gender-specific first translated text data based on genders-specific linguistics rules.

In an embodiment, the processor 50 is configured to identify any pronouns referring to the listener (addressee) and/or the speaker in the transcribed text data, preferably using a language processing algorithm. In this embodiment, the processor 50 is configured to tag or add the at least one gender markers to the transcribed text data, such as to the identified pronouns. The processor 50 is further configured to translate the transcribed text data into the first translated text data in the target language using the first on-premises machine translation model 110 based on the at least one gender marker. In this embodiment, the processor 50 is additionally configured to remove a translated version or versions of the at least one gender marker from the first translated text data, preferably using the genders-specific linguistic rules, to obtain the gender-specific first translated text data.

In an embodiment, the processor 50 is configured to select a male voice or a female voice based on gender information of the speaker. In this embodiment, the processor 50 is configured to control, in response to the user confirmation and in the selected male voice or female voice, the speaker 20 to play back the translated speech in the target language based on the translated speech data in the target language. The gender information can be generated in response to activation of the user interface.

In an embodiment, the memory 40 comprises a rule engine 150. In such an embodiment, the processor 50 is configured to analyze the transcribed text data using the rule engine 150 to identify words or phrases that are labelled as hard to translate. The processor 50 is also configured to replace any identified words or phrases are labelled as hard to translate in the transcribed text data with pre-defined substitutions using the rule engine to obtain adjusted transcribed text data in the source language. The processor 50 is further configured to translate the adjusted transcribed text data into the translated text data in the target language using the first machine translation model 110.

In an embodiment, the processor 50 is configured to convert the transcribed text data in the source language into standard transcribed text data in a standard version of the source language. In this embodiment, the processor 50 is configured to translate the standard transcribed text data into the translated text data in the target language using the first machine translation model 110.

In an embodiment, the processor 50 is configured to convert the transcribed text data in the source language into the standard transcribed text data in the standard version of the source language by replacing dialect-specific words or expressions with standard words or expressions in the source language.

In an embodiment, the processor 50 is configured to remove diacritics from the transcribed text data in the source language to obtain diacritics-free transcribed text data in the source language. The processor 50 is also configured to translate the diacritics-free transcribed text data into the translated text data in the target language using the first machine translation model 110. The processor 50 is further configured to add diacritics to the translated text data in the target language to obtain translated text data with diacritics in the target language. The processor 50 is additionally configured to synthesize, using the speech synthesis model 130, the translated speech data in the target language based on the translated text data with diacritics.

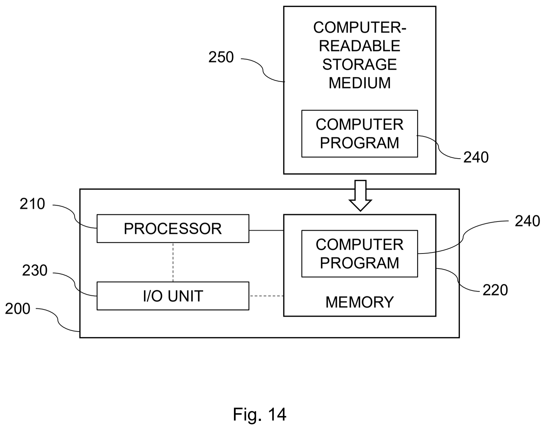

Fig. 14 is a schematic block diagram of a user device 200, such as computer, comprising at least one processor 210 and at least one memory 220 that can be used to implement the STS translation method. In such an embodiment, the STS translation could be implemented in a computer program 240, which is loaded into the memory 220 for execution by processing circuitry including one or more processors 210 of the user device 200. The at least one processor 120 and the at least one memory 220 are interconnected to each other to enable normal software execution. An input and output (I/O) unit 230 is preferably connected to the processor 210 and/or the memory 220 to enable input and output of data.

The I/O unit 230 could be in the form of an I/O port, an input port and an output port for wired data communication. Alternatively, the I/O unit 230 could be in the form of a transceiver, or a transmitter and a receiver, for wireless data communication.

The term processor should be interpreted in a general sense as any circuitry, system or device capable of executing program code or computer program instructions to perform a particular processing, determining or computing task. The processing circuitry including one or more processors 210 is, thus, configured to perform, when executing the computer program 240, well-defined processing tasks such as those described herein.

The at least one processor 210 does not have to be dedicated to only execute the above-described steps, functions, procedure and/or blocks, but may also execute other tasks.

In an embodiment, the computer program 240 comprises instructions, which when executed by at least one processor 210, cause the at least one processor 210 to transcribe speech spoken in a source language into transcribed text data in the source language using an on-premises speech recognition model 100; translate the transcribed text data into translated text data in a target language using a first on-premises machine translation model 110; reverse translate the translated text data into retranslated text data in the source language using a second on-premises machine translation model 120 that is different than the first on-premises machine translation model 110; output the transcribed text data and the retranslated text data for display of a transcribed text and a retranslated text; synthesize, using an on-premises speech synthesis model 130, translated speech data in the target language based on the translated text data; and output, in response to a user confirmation, the translated speech data in the target language for playback.

The proposed technology also provides a non-transitory computer-readable storage medium 250 comprising the computer program 240. By way of example, the software or computer program 240 may be realized as a computer program product, which is normally carried or stored on the non-transitory computer-readable medium 250, in particular a non-volatile medium. The non-transitory computer-readable medium 250 may include one or more removable or non-removable memory devices including, but not limited to a Read-Only Memory (ROM), a Random Access Memory (RAM), a Compact Disc (CD), a Digital Versatile Disc (DVD), a Blu-ray disc, a Universal Serial Bus (USB) memory, a Hard Disk Drive (HDD) storage device, a flash memory, a magnetic tape, or any other conventional memory device. The computer program 240 may, thus, be loaded into the operating memory 220 of the computer for execution by the at least one processor 210 thereof.

Hence, an embodiment relates to a non-transitory computer-readable medium 250 storing instructions that, when executed by at least one processor 210, cause the at least one processor 210 to transcribe speech spoken in a source language into transcribed text data in the source language using an on-premises speech recognition model 100; translate the transcribed text data into translated text data in a target language using a first on-premises machine translation model 110; reverse translate the translated text data into retranslated text data in the source language using a second on-premises machine translation model 120 that is different than the first on-premises machine translation model 110; output the transcribed text data and the retranslated text data for display of a transcribed text and a retranslated text; synthesize, using an on-premises speech synthesis model 130, translated speech data in the target language based on the translated text data; and output, in response to a user confirmation, the translated speech data in the target language for playback.

The various embodiments described in the foregoing for the STS translation method and user device 1 also apply to the computer program 240 and the non-transitory computer-readable medium 250.

In an embodiment, the at least one processor 210 is configured to output the transcribed text data, the retranslated text data and the translated text data for display of the transcribed text, the retranslated text and a translated text.

In an embodiment, the at least one processor 210 is configured to synthesize, in response to the user confirmation and using the on-premises speech synthesis model 130, the translated speech data in the target language based on the translated text data.

In an embodiment, the at least one processor 210 is configured to select the first on-premises machine translation model 110 from a set 115 of multiple first on-premises machine translation models based on information of the target language and select the second on-premises machine translation model 120 from a set 125 of multiple second on-premises machine translation models based on the information of the target language.

In an embodiment, the at least one processor 210 is configured to select the on-premises speech recognition model 100 from a set 105 of multiple on-premises speech recognition models based on information of the source language. In this embodiment, the at least one processor 210 is also configured to select the first on-premises machine learning model 110 from the set 115 of multiple first on-premises machine translation models 115 based on the information of the target language and the information of the source language, and select the second on-premises machine learning model 120 from the set 125 of multiple second on-premises machine translation models based on the information of the target language and the information of the source language.

In an embodiment, the at least one processor 210 is configured to adapt the translated text data into gender-specific translated text data based on gender-specific linguistic rules selected based on information of the gender of the listener. The at least one processor 210 is also configured to synthesize, using the on-premises speech synthesis model 130, the translated speech data in the target language based on the gender-specific translated text data.

In an embodiment, the at least one processor 210 is configured to select a male voice or a female voice based on gender information of the speaker. In this embodiment, the at least one processor 210 is configured to output, in response to the user confirmation, the translated speech data for playback of translated speech in the selected male voice or female voice.

In an embodiment, the at least one processor 210 is configured to analyze the transcribed text data using a rule engine 150 to identify words or phrases that are labelled as hard to translate. The at least one processor 210 is also configured to replace any identified words or phrases are labelled as hard to translate in the transcribed text data with pre-defined substitutions using the rule engine to obtain adjusted transcribed text data in the source language. The at least one processor 210 is further configured to translate the adjusted transcribed text data into the translated text data in the target language using the first on-premises machine translation model 110.

In an embodiment, the at least one processor 210 is configured to convert the transcribed text data in the source language into standard transcribed text data in a standard version of the source language. In this embodiment, the at least one processor 210 is configured to translate the standard transcribed text data into the translated text data in the target language using the first on-premises machine translation model 110.

In an embodiment, the at least one processor 210 is configured to convert the transcribed text data in the source language into the standard transcribed text data in the standard version of the source language by replacing dialect-specific words or expressions with standard words or expressions in the source language.

In an embodiment, the at least one processor 210 is configured to remove diacritics from the transcribed text data in the source language to obtain diacritics-free transcribed text data in the source language. The at least one processor 210 is also configured to translate the diacritics-free transcribed text data into the translated text data in the target language using the first on-premises machine translation model 110. The at least one processor 210 further configured to add diacritics to the translated text data in the target language to obtain translated text data with diacritics in the target language. The at least one processor 210 is additionally configured to synthesize, using the on-premises speech synthesis model 130, the translated speech data in the target language based on the translated text data with diacritics.

The embodiments also relate to a system 300 comprising a user device 1 and one or more computing devices 320, 330 implemented in a private or local network or cloud 310, see Fig. 16. The user device 1 comprises a microphone 10 configured to record speech, a speaker 20 configured to play back speech, a screen 30 and a communication unit 60 configured to communicate with the one or more computing devices 320, 330 in the private or local network or cloud 310. The one or more computing devices 320, 330 comprises one or more memories 322, 332 comprising an on-premises speech recognition model 100, a first on-premises machine translation model 110, a second on-premises machine translation model 120 and an on-premises speech synthesis model 130. The one or more computing devices 320, 330 comprises one or more processors 324, 334 configured to transcribe speech spoken in a source language and recorded by the microphone 10 into transcribed text data in the source language using the on-premises speech recognition model 100. The one or more processors 324, 334 is configured to translate the transcribed text data into translated text data in a target language using the first on-premises machine translation model 110 and reverse translate the translated text data into retranslated text data in the source language using the second on-premises machine translation model 120 that is different than the first on-premises machine translation model 110. The one or more processors 324, 334 is configured to transmit the transcribed text data and the retranslated text data to the user device 1. The user device 1 is configured to display, on the screen 30, a transcribed text based on the transcribed text data and a retranslated text based on the retranslated text data. The one or more processors 324, 334 is configured to synthesize, using the on-premises speech synthesis model 130, speech data in the target language based on the translated text data. The one or more processors 324, 334 is configured to transmit, in response to a user confirmation from the user device 1, the speech data in the target language. The user device 1 is configured to play back speech in the target language on the speaker 20 based on the speech data in the target language.

In this embodiment, at least part of the STS translation method, including speech transcription, machine translation and speech synthesis is implemented in the private or local network or cloud 310 at one or more computing devices 320, 330. In such a case, the cloud- or network-implemented operations could be performed by a single computing device 320, 330 in the private or local network or cloud 310 or be distributed among multiple computing devices 320, 330 in the private or local network or cloud 310.

The computing devices 320, 330 could, for instance, be in the form of one or more computers 320 and/or one or more servers 330.

The communication unit 60 of the user device 1 could be in the form of a transceiver or a transmitter and a receiver for wireless communication with the one or more communication devices 320, 330. Alternatively, the communication unit 60 could be in the form of a I/O port, or an input port and an output port for wired communication with the one or more communication devices 320, 330.

The various embodiments described in the foregoing in connection with the STS translation method as shown in Figs. 1, 2, 5-9, the user device as shown in Figs. 10, 11, 13 and 14 also apply to the system 300 as shown in Fig. 16.

### EXAMPLE

This Example shows a particular implementation example of translation between English and Arabic language. A speaker records audio, i.e., speech spoken in a source language. The audio or speech data is sent to the speech recognition model 100, which is either on-device or in a local or private network or cloud. For instance, a three letter ISO code of the source language is also sent with the audio file. If the required models are not provided on device or in the system 300, they are preferably downloaded from a model registry or repository.

### Speech-to-text

### Pre-processing

The three letter ISO code of the source language is used as a language tag to determine if the source language is supported or not. If not supported, the user receives an error that the language is not supported.

Different user devices 1 may record audio in different formats, e.g., iOS in mp4, Android in mp3 and Chrome in WebM. In such a case, the audio file is preferably converted to standard audio format, such as standard uncompressed Waveform Audio File (WAV) format.

The audio file is preferably checked to verify that it contains any audible content. As an example, standard signal processing using an open-source tool FFmpeg can be used to identify the mean volume of the audio file. If the mean volume is lower than a defined threshold value, such as -40 db, the original audio file and the converted audio file in WAV format are deleted, and the user receives an error that they need to speak louder.

### Inference in speech-to-text

The audio file is input to the on-premises speech recognition model 100 for the requested language requested to produce an output. This output can either be in form of plain text or in form of large vectors, called "logits". These logits give the probability of a particular audio segment being equal to a particular letter. At this point the original audio files and the converted audio file can be deleted. If the output is text, the method continues to the post-processing. If the output is logits, then a separate decoding algorithm, such as beam search, is preferably used against a language model to find the best text representing the audio signal. This language model is a collection of words and phrases of a certain length. The language model could be a general language model or a domain-specific language model with vocabulary within a specific domain, such as medical vocabulary.

### Post-processing

The inferred text is then preferably passed to a spell checker that particularly fixes the spellings and capitalizations for abbreviations. The inferred text is optionally checked against a list of vulgar/toxic words. If there is a match(es), the word(s) are returned as a separate list along with the inferred text. In the user interface, these words could be marked, such as underlined, and a yellow triangle appears next to them. This is to warn the speaker that they must give more attention to the verification of the transcription. Capitalizations and punctuations can be restored in the inferred text if the on-premises speech recognition model 100 generates text that lacks capitalizations and punctuations.

### Translation

### Pre-processing

The on-premises machine translation model 110 receives a set of sentences and two languages codes, the source language and the target language. It first checks if the source-to-target pair is supported or not. By supported it could mean that we have a model 110 loaded that supports direct source-to-target translation or we have an intermediate language model, available with connections to both source and the target, i.e., two models, source-to-intermediate and intermediate-to-target are loaded, and an indirect translation is supported. Such an intermediate translation could be used for low-resource languages for which there is not enough translation data available to create a robust translation model to another low resource language.

If the language is Arabic, a separate machine learning model can be used to convert the text into modern standard Arabic (MSA). This process is beneficial as much of the written data in Arabic is in MSA, however, the spoken language is in dialectic Arabic.

There are words for which no equivalent translations exist, e.g., the Swedish word "snuvig", which is an adjective. Apart from the Scandinavian languages, this word does not exist as an adjective. To make it easier for the translation inference, such words can be replaced with equivalent words or phrases.

Optionally, abbreviations that involve full stops, such as Dr., Mr., Ms., Mrs. are identified and replaced with full words, such as doctor, mister, etc. The end punctuation can be used to notify the model that the input has finished. If the input sentence did not contain any of the ?, !, or . (and their equivalent in other languages), a full-stop is added at the end of the input. At this point we have one or more sentences that were provided by the speaker. In an embodiment, each sentence is treated as a separate input and batched together to the model, i.e., instead of one large input.

It is possible to add gender references to the speaker's and the addressee's genders to the sentences. These references guide the machine learning model produce the correct output.

### Inference

If a model 110 existed that could translate source-to-target directly, that model 110 is used, else an indirect translation is performed. The output of this process is a set of sentences in the intermediate language.

### Post-processing of machine translation

Any gender references that were added in the post-processing step that helped guide the inference mechanism to create translations that conform to the genders of the speaker and the addressee, are preferably removed from the target sentences.

### Indirect translation

If it is an indirect translation, the steps pre-processing, inference and post-processing are repeated for intermediate-to-target translation.

### Reverse translation post-processing

While performing reverse translation, the pre-processing, inference, post-processing, and indirect translation are executed with an extra post-processing step where the context from the original source text may be used to guide the reverse translation and remove ambiguities. Let us consider the following task of English to Arabic translation:
English: You can live without a gall bladder.
Arabic: 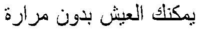
   Here the Arabic word for gall bladder is the same as for bitterness. A reverse translation of the Arabic text then becomes:
   English: You can live without bitterness.

To fix these errors, a rule engine looks at the presence of gall bladder in the original input and applies the replacement of bitterness with gall bladder.

### Text-to-Speech

The input to the on-premises speech synthesis model 130 is one or more sentences, the language ISO code, and optionally the genders of the speaker and the addressee. If the language is not supported, an error is returned to the user.

### Pre-processing

The input is pruned to not contain any special characters, such as quotation marks, underscores, etc. that are not part of normal speech.

Arabic text-to-speech is hard since in written Arabic, the semi vowels are often not written and instead derived from the context. These semi-vowels are particularly important also from a gender point of view, as the same word (written without semi-vowels) can be pronounced in two different ways depending on if it is uttered by a male or a female.

If there were multiple sentences in the input, each sentence is extracted and dealt with as a separate input during the inference.

### Inference in text-to-speech

Each sentence is then converted into its phonetic equivalent and the phonetic equivalent is converted into audio using the on-premises speech synthesis model 130.

### Post-processing

The resulting audio from all the sentences are patched together with a slight pause between the sentences. The resulting audio is optionally given to an amplifier that boosts the volume. This is to remove the need for a separate speaker at the user's device when communicating with people with hearing difficulties. The boosted audio is then sent to the user interface, i.e., speaker for play back.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A computer-implemented speech-to-speech translation method performed by a processor (50, 324, 334), the method comprising:
transcribing speech (S2) spoken in a source language into transcribed text data in the source language using an on-premises speech recognition model (100) stored in a memory (40, 322, 332) connected to the processor (50, 324, 334);
translating (S3) the transcribed text data into translated text data in a target language using a first on-premises machine translation model (110) stored in the memory (40, 322, 332);
reverse translating (S4) the translated text data into retranslated text data in the source language using a second on-premises machine translation model (120) stored in the memory (40, 322, 332), wherein the second on-premises machine translation model (120) is different than the first on-premises machine translation model (110);
displaying (S5), on a screen (30) of a user device (1), a transcribed text based on the transcribed text data and a retranslated text based on the retranslated text data;
synthesizing (S6, S7), using an on-premises speech synthesis model (130) stored in the memory (40, 322, 332), translated speech data in the target language based on the translated text data; and
playing back (S8), in response to a user confirmation and based on the translated speech data in the target language, translated speech in the target language

2. The method according to claim 1, wherein displaying (S5) comprises displaying (S5), on the screen (30), the transcribed text, the retranslated text and a translated text based on the translated text data.

3. The method according to claim 1 or 2, wherein synthesizing (S6, S7) comprises synthesizing (S7), in response to the user confirmation and using the on-premises speech synthesis model (130), the translated speech data in the target language based on the translated text data.

4. The method according to any one of claims 1 to 3, further comprising recording (S1) the speech spoken in the source language.

5. The method according to any one of claims 1 to 4, further comprising:
receiving (S10) information of the target language;
selecting (S12) the first on-premises machine translation model (110) from a set (115) of multiple first on-premises machine translation models stored in the memory (40, 322, 332) based on the information of the target language; and
selecting (S13) the second on-premises machine translation model (120) from a set (125) of multiple second on-premises machine translation models stored in the memory (40, 322, 332) based on the information of the target language.

6. The method according to claim 5, further comprising:
receiving (S10) information of the source language; and
selecting (S11) the on-premises speech recognition model (100) from a set (105) of multiple on-premises speech recognition models stored in the memory (40, 322, 332) based on the information of the source language, wherein
selecting (S12) the first on-premises machine translation model (110) comprises selecting (S12) the first on-premises machine learning model (110) from the set (115) of multiple first on-premises machine translation models (115) stored in the memory (40, 322, 332) based on the information of the target language and the information of the source language; and
selecting (S13) the second on-premises machine translation model (120) comprises selecting (S13) the second on-premises machine learning model (120) from the set (125) of multiple second on-premises machine translation models stored in the memory (40, 322, 332) based on the information of the target language and the information of the source language.

7. The method according to any one of claims 1 to 6, further comprising:
receiving (S20) gender information of a gender of a listener and/or of a speaker; and
on-premises adapting (S21) the translated text data into gender-specific translated text data based on gender-specific linguistic rules selected based on the information of the gender of the listener and/or of the speaker, wherein synthesizing (S6, S7) comprises synthesizing (S6, S7), using the on-premises speech synthesis model (130), the translated speech data in the target language based on the gender-specific translated text data.

8. The method according to any one of claims 1 to 7, further comprising:
receiving (S20) gender information of a gender of a speaker; and
selecting (S22) a male voice or a female voice based on the gender information of the speaker, wherein
playing back (S8) comprises playing back (S8), in response to the user confirmation and in the selected male voice or female voice, the translated speech in the target language based on the translated speech data in the target language.

9. The method according to any one of claims 1 to 8, further comprising:
analyzing (S30) the transcribed text data using an on-premises rule engine (150) to identify words or phrases that are labelled as hard to translate; and
replacing (S31) any identified words or phrases are labelled as hard to translate in the transcribed text data with pre-defined substitutions using an on-premises rule engine (150) to obtain adjusted transcribed text data in the source language, wherein translating (S3) the transcribed text data comprises translating (S3) the adjusted transcribed text data into the translated text data in the target language using the first on-premises machine translation model (110).

10. The method according to claim 9, wherein the words or phrases that are labelled as hard to translate are selected from the group consisting of idiomatic expressions, domain-specific terms, and words and phrases not part of the training data used to train the first on-premises machine translation model (110).

11. The method according to any one of claims 1 to 10, further comprising converting (S40) the transcribed text data in the source language into standard transcribed text data in a standard version of the source language, wherein translating (S3) the transcribed text data comprises translating (S3) the standard transcribed text data into the translated text data in the target language using the first on-premises machine translation model (110), preferably wherein converting (S40) the transcribed text data comprises converting (S40) the transcribed text data in the source language into the standard transcribed text data in the standard version of the source language by replacing dialect-specific words or expressions with standard words or expressions in the source language.

12. The method according to any one of claims 1 to 11, further comprising:
removing (S50) diacritics from the translated text data in the target language to obtain diacritics-free translated text data in the target language; and
adding (S51) diacritics to the diacritics-free translated text data in the target language to obtain translated text data with diacritics in the target language, wherein
synthesizing (S6, S7) speech comprises synthesizing (S6, S7), using the on-premises speech synthesis model (130), the translated speech data in the target language based on the translated text data with diacritics.

13. A user device (1) comprising:
a microphone (10) configured to record speech;
a speaker (20) configured to play back speech;
a screen (30);
a memory (40) comprising a speech recognition model (100), a first machine translation model (110), a second machine translation model (120) and a speech synthesis model (130); and
a processor (50) configured to:
transcribe speech spoken in a source language and recorded by the microphone (10) into transcribed text data in the source language using the speech recognition model (100);
translate the transcribed text data into translated text data in a target language using the first machine translation model (110);
reverse translate the translated text data into retranslated text data in the source language using the second machine translation model (120) that is different than the first machine translation model (110);
display, on the screen (30), a transcribed text based on the transcribed text data and a retranslated text based on the retranslated text data;
synthesize, using the speech synthesis model (130), speech data in the target language based on the translated text data; and
control, in response to a user confirmation, the speaker (20) to play back speech in the target language based on the speech data in the target language.

14. A computer program (240) comprising instructions, which when executed by at least one processor (210), cause the at least one processor (210) to:
transcribe speech spoken in a source language into transcribed text data in the source language using an on-premises speech recognition model (100);
translate the transcribed text data into translated text data in a target language using a first on-premises machine translation model (110);
reverse translate the translated text data into retranslated text data in the source language using a second on-premises machine translation model (120) that is different than the first on-premises machine translation model (110);
output the transcribed text data and the retranslated text data for display of a transcribed text and a retranslated text;
synthesize, using an on-premises speech synthesis model (130), translated speech data in the target language based on the translated text data; and
output, in response to a user confirmation, the translated speech data in the target language for playback.

15. A system (300) comprising:
a user device (1); and
one or more computing devices (320, 330) implemented in a private or local network or cloud (310), wherein
the user device (1) comprises:
a microphone (10) configured to record speech;
a speaker (20) configured to play back speech;
a screen (30); and
a communication unit (60) configured to communicate with the one or more computing devices (320, 330) in the private or local network or cloud (310); and
the one or more computing devices (320, 330) comprises:
one or more memories (322, 332) comprising an on-premises speech recognition model (100), a first on-premises machine translation model (110), a second on-premises machine translation model (120) and an on-premises speech synthesis model (130); and
one or more processors (324, 334) configured to:
transcribe speech spoken in a source language and recorded by the microphone (10) into transcribed text data in the source language using the on-premises speech recognition model (100);
translate the transcribed text data into translated text data in a target language using the first on-premises machine translation model (110);
reverse translate the translated text data into retranslated text data in the source language using the second on-premises machine translation model (120) that is different than the first on-premises machine translation model (110);
transmit the transcribed text data and the retranslated text data to the user device (1), wherein the user device (1) is configured to display, on the screen (30), a transcribed text based on the transcribed text data and a retranslated text based on the retranslated text data;
synthesize, using the on-premises speech synthesis model (130), speech data in the target language based on the translated text data; and
transmit, in response to a user confirmation from the user device (1), the speech data in the target language, wherein the user device (1) is configured to play back speech in the target language on the speaker (20) based on the speech data in the target language.
